# EUROPEAN PATENT APPLICATION

(11) **EP 4 517 976 A1**
(43) Date of publication of application: **05.03.2025**
(21) Application number: 23794818.7
(22) Date of filing: 14.03.2023
(51) Int. Cl.: H01M 50/244, H01M 50/204, H01M 50/289, H01M 10/613, H01M 10/637, H01M 10/6566, H01M 10/6554

(54) **ENERGY STORAGE MODULE AND ENERGY STORAGE CABINET**

(30) Priority: 29.04.2022 CN 202221055633 U
(71) Applicant: BYD Company Limited, Shenzhen, Guangdong 518118 (CN)
(72) Inventor: WU, Youhe, Shenzhen, Guangdong 518118 (CN); HUANG, Zhixue, Shenzhen, Guangdong 518118 (CN); DAI, Xiangjun, Shenzhen, Guangdong 518118 (CN); ZHOU, Lei, Shenzhen, Guangdong 518118 (CN)
(74) Representative: Mathys & Squire
(86) International application number: PCT/CN2023/081394
(87) International publication number: WO 2023/207382

(57) **Abstract**

An energy storage module (201) and an energy storage cabinet. The energy storage module (201) includes: an energy storage unit (220), the energy storage unit (220) including a plurality of cells (208), and the plurality of cells (208) being arranged in sequence in the thickness direction of the cells (208); a first side plate (211) and a second side plate (212), the energy storage unit (220) being provided between the first side plate (211) and the second side plate (212); and support beams (219), the support beams (219) extending in the thickness direction of the cells (208) and being connected between the first side plate (211) and the second side plate (212) so as to enable the first side plate (211) and the second side plate (212) to clamp the energy storage unit (220), and the support beams (219) being arranged on at least one side of the energy storage unit (220) in the width direction of the cells (208).

## Description

### CROSS-REFERENCE TO RELATED APPLICATIONS

The present disclosure claims priority to Chinese Patent Application No. 202221055633.9 filed on April 29, 2022, which is incorporated herein by reference in its entirety.

### FIELD

The present disclosure relates to the field of energy storage, and in particular, to an energy storage module and an energy storage cabinet having the energy storage module.

### BACKGROUND

In related technologies, existing energy storage module includes a support plate, side plates, top plate and multiple cells. The support plate, side plates and top plate define an installation space for installing the cells, and fixing brackets need to be installed between cells to fix them, resulting in a complex structure of the energy storage module and affecting its assembly efficiency. At the same time, the fixing brackets occupy the internal space of the energy storage module, affecting its energy density and leading to larger volume of the energy storage module.

### SUMMARY

The present disclosure is intended to resolve one of technical problems in the related art at least to some extent. Therefore, an object of the present disclosure is to provide an energy storage module that can clamp and fix an energy storage unit.

The present disclosure further provides an energy storage cabinet.

According to the energy storage module of the present disclosure, including:
an energy storage unit, the energy storage unit including a plurality of cells, and the plurality of cells are arranged in sequence in the thickness direction of the cells;
a first side plate and a second side plate, the energy storage unit is provided between the first side plate and the second side plate;
a support beam, the support beam extending in the thickness direction of the cells and is connected between the first side plate and the second side plate so as to enable the first side plate and the second side plate to clamp the energy storage unit, and the support beam is arranged on at least one side of the energy storage unit in the width direction of the cells.

According to the energy storage module of the present disclosure, the energy storage unit can be clamped and fixed through the cooperation of the energy storage unit, the first side plate, the second side plate and the support beam.

In some embodiments of the present disclosure, the energy storage module, further including: a top cover and a bottom cover, the top cover and the bottom cover are located on two sides of the energy storage unit respectively in the width direction of the cells, and the top cover and the bottom cover are both connected to the first side plate and the second side plate, and a second air duct is formed between the surface of the energy storage unit near the top cover and the top cover and/or between the surface of the energy storage unit near the bottom cover and the bottom cover through the separation effect of the support beam.

In some embodiments of the present disclosure, the support beam is in contact with the surface of the energy storage unit near the top cover and the top cover, and/or the support beam is in contact with the surface of the energy storage unit near the bottom cover and the bottom cover, to divide the second air duct into a plurality of sub-air ducts, and the support beam has air passages connecting two adjacent sub-air ducts.

In some embodiments of the present disclosure, the support beam spans all of the cells in the thickness direction of the cells.

In some embodiments of the present disclosure, the inner surface of the first side plate near the energy storage unit and/or the inner surface of the second side plate near the energy storage unit is provided with a limiting boss protruding towards the energy storage unit, and the support beam overlaps with the limiting boss.

In some embodiments of the present disclosure, a third air duct is formed inside the limiting boss.

In some embodiments of the present disclosure, the first side plate and the second side plate are both provided with mounting holes for assembling the support beam, and the axis of the mounting holes extends in the thickness direction of the cells, fasteners pass through the mounting holes and cooperate with the support beam so as to enable the first side plate and the second side plate to clamp the energy storage unit.

In some embodiments of the present disclosure, the energy storage module further including: a heat sink, the heat sink is provided between at least two adjacent cells among the plurality of cells, the heat sink is in contact with the adjacent cells, and the heat sink defines a first air duct extending along the length direction of the cells.

In some embodiments of the present disclosure, the energy storage module further including: a driving fan, the driving fan is located at one end of the energy storage unit and spaced apart from the energy storage unit in the length direction of the cells, and the driving fan is used to drive gas to flow along the first air duct in the first air duct.

In some embodiments of the present disclosure, there are a plurality of driving fans, and the plurality of driving fans are sequentially spaced apart along the thickness direction of the cells.

In some embodiments of the present disclosure, the energy storage module further including: a heat dissipating end plate, the driving fan is installed on the heat dissipating end plate, and the heat dissipating end plate is fixedly connected to the first side plate and/or the second side plate.

In some embodiments of the present disclosure, the energy storage module further including: a fixing plate, the fixing plate is installed on the first side plate and/or the second side plate, and the fixing plate is provided with a handle.

In some embodiments of the present disclosure, the energy storage module further including: a fixing bracket, the fixing bracket is installed on the first side plate and/or the second side plate, the fixing bracket is located between the fixing plate and the heat dissipating end plate and is used to limit the position of the heat dissipating end plate.

In some embodiments of the present disclosure, the heat dissipating end plate is provided with a positive connection terminal and a negative connection terminal, the positive connection terminal is connected to the total positive output pole of the energy storage unit, and the negative connection terminal is connected to the total negative output pole of the energy storage unit.

In some embodiments of the present disclosure, the positive connection terminal and the negative connection terminal are arranged on the same side near the heat dissipating end plate in the thickness direction of the cells.

In some embodiments of the present disclosure, the heat dissipating end plate defines a mounting groove, and the positive connection terminal and the negative connection terminal are both located in the mounting groove.

In some embodiments of the present disclosure, the heat dissipating end plate further defines a fool-proof slot, the fool-proof slot is communicated with the mounting groove, and the fool-proof slot is used for wiring.

In some embodiments of the present disclosure, the heat dissipating end plate further defines a wiring slot, the wiring slot is communicated with the mounting groove, and the fool-proof slot and the wiring slot are located on two sides of the mounting groove respectively.

In some embodiments of the present disclosure, the energy storage module further including: a temperature detection member, the temperature detection member is used to collect the temperature of the energy storage unit, the driving fan and the temperature detection member are both connected to a battery management system of the energy storage module, and the battery management system is used to regulate the speed of the driving fan by receiving the temperature information collected by the temperature detection member.

In some embodiments of the present disclosure, the energy storage module further including: a ventilation panel, the ventilation panel is provided on the side of the driving fan away from the energy storage unit, and the ventilation panel is provided with air outlet holes.

In some embodiments of the present disclosure, the energy storage module further including: an end plate, the end plate is provided at the other end of the energy storage unit and spaced apart from the energy storage unit, the end plate is connected to the top cover and/or the bottom cover, and the end plate is provided with first air inlet holes communicating with the first air duct.

In some embodiments of the present disclosure, the top cover and/or the bottom cover may be provided with second air inlet holes communicating with the second air duct.

In some embodiments of the present disclosure, the length dimension of the cell (208) is E, satisfying the relationship: 400mm≤E≤1500mm; the width dimension of the cell (208) is F, satisfying the relationship: 70mm≤F≤150mm;the thickness dimension of the cell (208) is G, satisfying the relationship: 10mm≤G≤25mm.

According to the energy storage cabinet of the present disclosure, including the energy storage module mentioned above.

The additional aspects and advantages of the present disclosure are partially provided in the following descriptions, some of which will become apparent from the following descriptions or may be learned from practices of the present disclosure.

### BRIEF DESCRIPTION OF THE DRAWINGS

FIG. 1 is an exploded view of an energy storage module according to an embodiment of the present disclosure;
FIG. 2 is a schematic diagram of the internal structure of an energy storage module according to an embodiment of the present disclosure;
FIG. 3 is a schematic diagram of an energy storage module according to an embodiment of the present disclosure;
FIG. 4 is a schematic diagram of an energy storage module without a ventilation panel according to an embodiment of the present disclosure;
FIG. 5 is a schematic assembly diagram of the cells and side plates of the energy storage module according to an embodiment of the present disclosure;
FIG. 6 is a schematic diagram of the relative position of the drive fan and the heat sink of the energy storage module according to an embodiment of the present disclosure;
FIG. 7 is a schematic assembly diagram of the cells and the heat sink of the energy storage module according to an embodiment of the present disclosure;
FIG. 8 is an enlarged view of M in FIG. 7;
FIG. 9 is a side view of the heat sink of the energy storage module according to an embodiment of the present disclosure;
FIG. 10 is a front view of the heat sink of the energy storage module according to an embodiment of the present disclosure;
FIG. 11 is a schematic diagram of a cell of an energy storage module according to an embodiment of the present disclosure;
FIG. 12 is a schematic assembly diagram of the heat dissipating end plate and the drive fan according to an embodiment of the present disclosure;
FIG. 13 is a schematic diagram from another angle after assembly of the heat dissipating end plate and the driving fan according to an embodiment of the present disclosure;
FIG. 14 is a schematic diagram of the second side plate and the fixing bracket according to an embodiment of the present disclosure;
FIG. 15 is a schematic assembly diagram of the second side plate and the fixing plate according to an embodiment of the present disclosure;
FIG. 16 is a schematic diagram of a top cover according to an embodiment of the present disclosure;
FIG. 17 is a front view of a support beam according to an embodiment of the present disclosure;
FIG. 18 is a top view of a support beam according to an embodiment of the present disclosure;
FIG. 19 is a schematic assembly diagram of the cells and connecting piece according to an embodiment of the present disclosure;
FIG. 20 is a schematic assembly diagram of the connecting piece and the busbar mounting rack according to an embodiment of the present disclosure;
FIG. 21 is partial enlarged view of the assembly of the connecting piece and the busbar mounting rack according to an embodiment of the present disclosure;
FIG. 22 is schematic assembly diagram of the heat dissipating end plate, drive fan and information collector according to an embodiment of the present disclosure;
FIG. 23 is a schematic diagram of the assembly of the electrical connection assembly and connection terminals according to an embodiment of the present disclosure;
FIG. 24 is another angle schematic diagram of the assembly of the electrical connection assembly and connection terminals according to an embodiment of the present disclosure;
FIG. 25 is a cross-sectional view at A-A in FIG. 2.
FIG. 26 is an exploded view of the conductive bar and connection terminals according to an embodiment of the present disclosure;
FIG. 27 is a schematic diagram of the assembly of conductive bar and connection terminals according to an embodiment of the present disclosure;
FIG. 28 is a exploded view of the conductive bar and the insulating cover according to an embodiment of the present disclosure;
FIG. 29 is a schematic diagram of the assembly of the conductive bar and the insulating cover according to an embodiment of the present disclosure;
FIG. 30 is an exploded view of the electrical connection assembly and the connection terminals on the energy storage module according to an embodiment of the present disclosure;
FIG. 31 is a schematic assembly diagram of electrical connection assembly and the connection terminals on the energy storage module according to an embodiment of the present disclosure;
FIG. 32 is a schematic diagram of a ventilation panel according to an embodiment of the present disclosure.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, are intended to explain the present disclosure and cannot be construed as a limitation on the present disclosure.

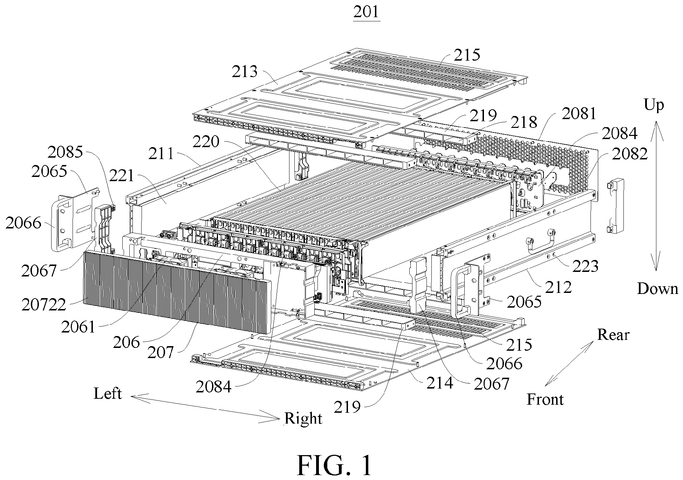

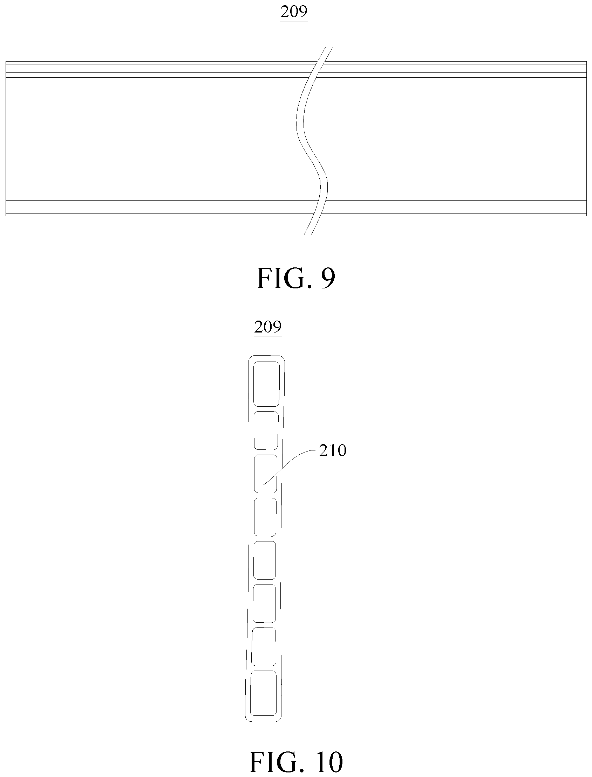

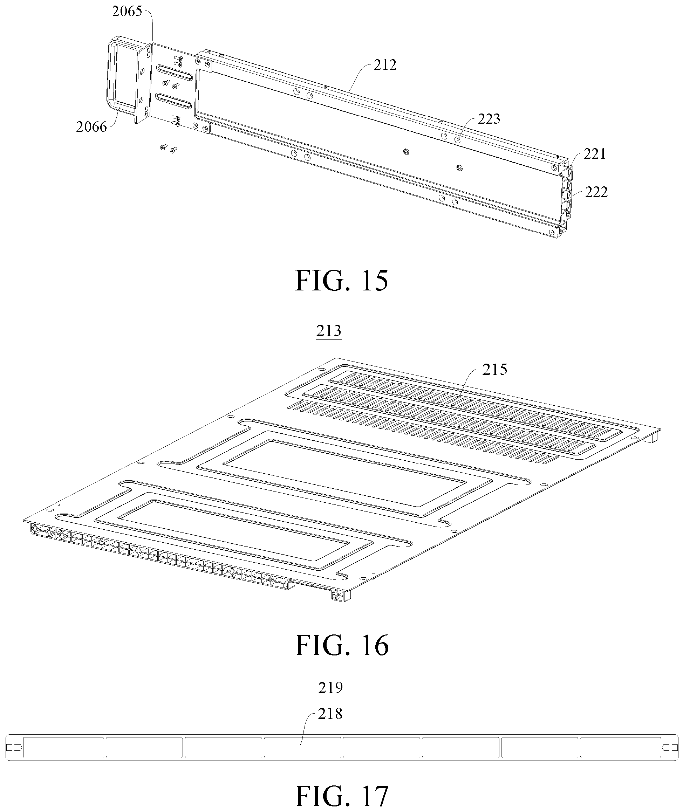

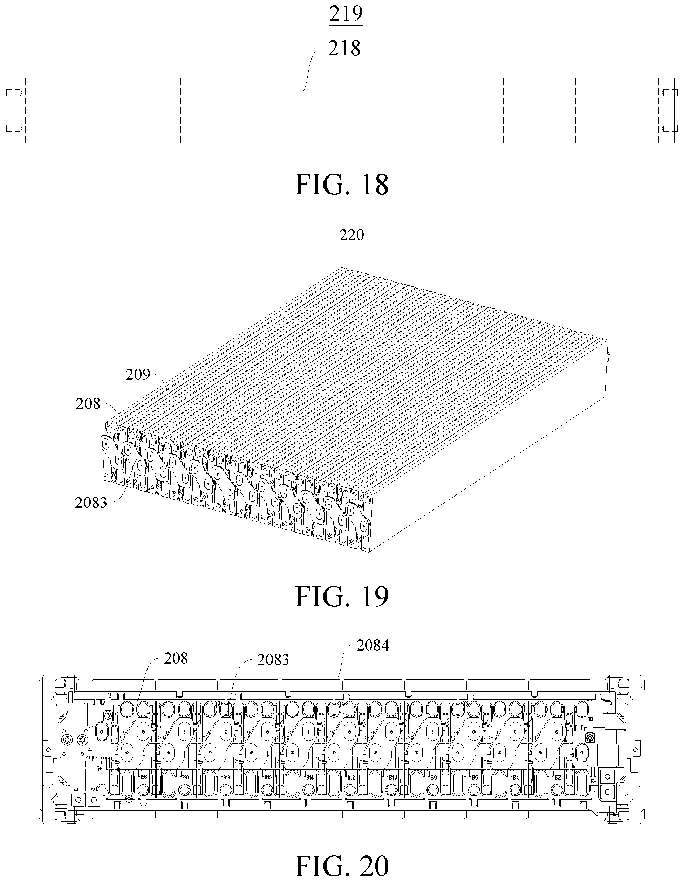

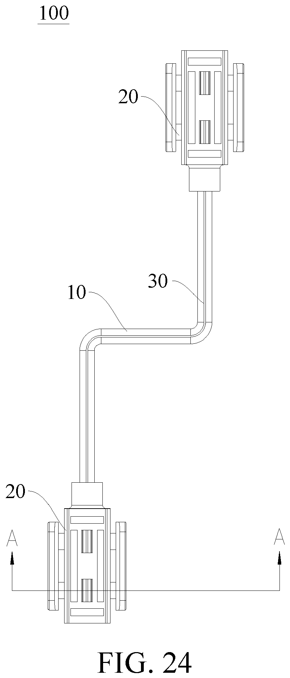

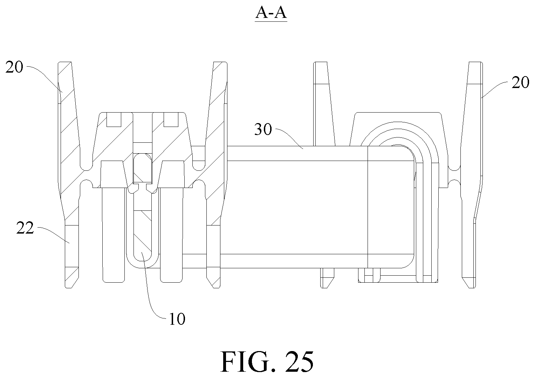

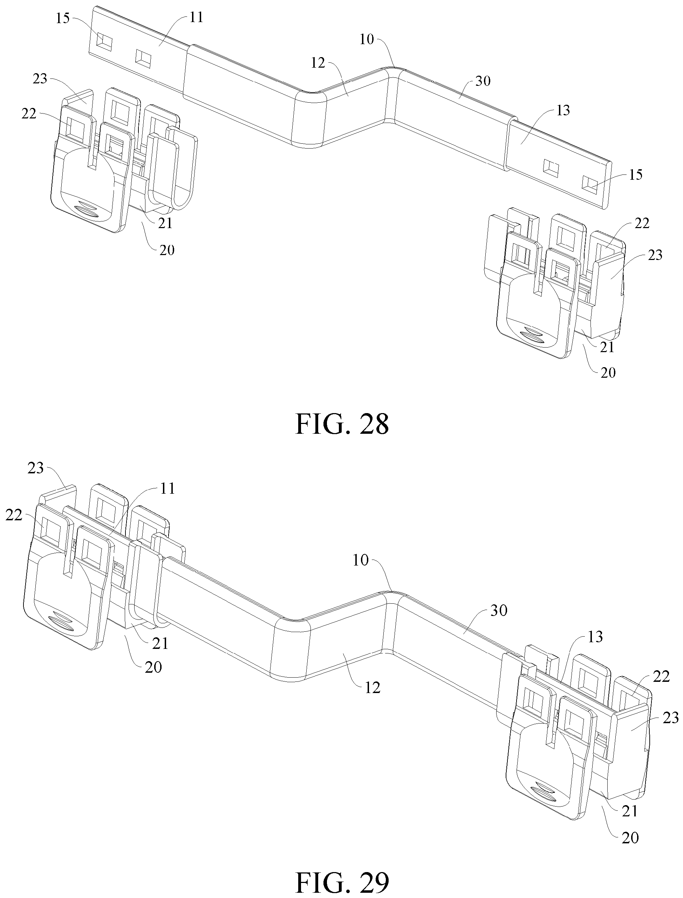

An energy storage module 201 according to the embodiment of the present disclosure is described below with reference to FIG. 1 to FIG. 32. The energy storage module 201 can be installed in en energy storage cabinet to supply power to other electrical equipment.

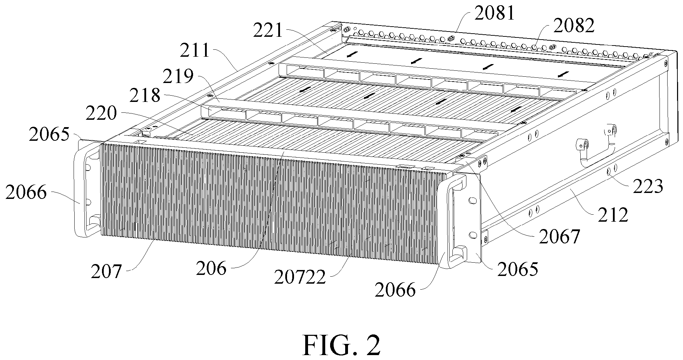

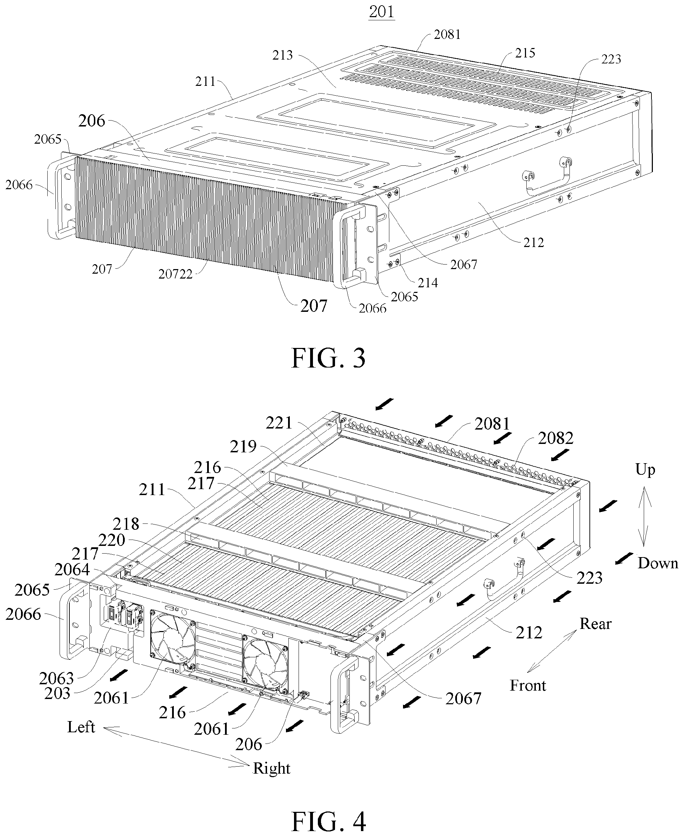

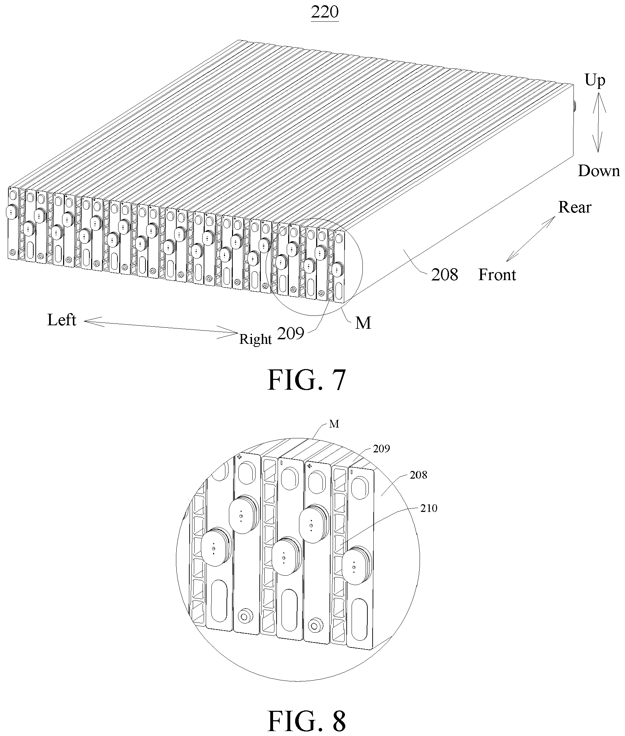

As shown in FIG. 1 to FIG. 32, the energy storage module 201 according to the embodiment of the present disclosure includes: an energy storage unit 220, a support beam 219, a first side plate 211 and a second side plate 212. The energy storage unit 220 includes a plurality of cells 208, and the plurality of cells 208 are arranged in sequence along the thickness direction of the cells 208. When the energy storage unit 220 is placed in the direction shown in FIG. 7, the thickness direction of the cells 208 refers to the left-right direction shown in FIG. 7. The energy storage unit 220 is arranged between the first side plate 211 and the second side plate 212. As shown in FIG. 2 and FIG. 4, the support beam 219 extends along the thickness direction of the cells 208, and the support beam 219 is connected between the first side plate 211 and the second side plate 212 so as to enable the first side plate 211 and the second side plate 212 to clamp the energy storage unit 220. The support beam 219 is provided on at least one side of the energy storage unit 220 in the width direction of the cells 208. When the energy storage unit 220 is placed in the direction shown in FIG. 2, the width direction of the cell 208 is the up-down direction of the energy storage module 201 in FIG. 2. The support beam 219 can be provided on the upper side of the energy storage unit 220, the support beam 219 can also be provided on the lower side of the energy storage unit 220, or the support beam 219 can also be provided on both the upper and lower sides of the energy storage unit 220. For example, support beam 219 is provided on both the upper and lower sides of the energy storage unit 220.

As shown in FIG. 4, when the energy storage module 201 is placed in the direction shown in FIG. 4, the first side plate 211 and the second side plate 212 are respectively arranged on the left and right sides of the energy storage unit 220. The present disclosure is described by taking the example that the first side plate 211 is arranged on the left side of the energy storage unit 220 and the second side plate 212 is arranged on the right side of the energy storage unit 220. The first side plate 211 and the second side plate 212 are connected by a connecting beam, and since the energy storage unit 220 is arranged between the first side plate 211 and the second side plate 212, after the connecting beam assembles the first side plate 211 and the second side plate 212 together, the first side plate 211 and the second side plate 212 can clamp the energy storage unit 220, and the energy storage unit 220 can be fixed in the energy storage module 201. There is no need to set brackets for fixing the cells 208 inside the energy storage module 201, so the space for arranging the cells 208 in the energy storage module 201 is increased, and more cells 208 can be arranged in the energy storage module 201, thereby improving the energy density of the energy storage module 201. When the energy storage module 201 has the same energy density, the energy storage module 201 of the present disclosure has a smaller volume. Furthermore, by providing support beam 219 on both the lower and upper sides of the energy storage unit 220, the support beam 219 on the lower side of the energy storage unit 220 can support the energy storage unit 220, so that the energy storage unit 220 is firmly clamped between the first side plate 211 and the second side plate 212. At the same time, by clamping the energy storage unit 220 with the support beam 219, the first side plate 211 and the second side plate 212, the structure of the energy storage module 201 can be simplified, the assembly efficiency of the energy storage module 201 can be improved, thus improving the production efficiency of the energy storage module 201.

Therefore, through the cooperation of the energy storage unit 220, the first side plate 211, the second side plate 212 and the support beam 219, the energy storage unit 220 can be clamped, the structure of the energy storage module 201 is simplified, and the assembly efficiency of the energy storage module 201 is improved. In addition, there is no need to set brackets for fixing the cells 208 inside the energy storage module 201. More cells 208 can be arranged in the energy storage module 201, which improves the energy density of the energy storage module 201. When the energy storage module 201 has the same energy density, the volume of the energy storage module 201 is smaller.

In some embodiments of the present disclosure, as shown in FIG. 1 and FIG. 3, the energy storage module 201 may also include: a top cover 213 and a bottom cover 214. In the width direction of the cells 208, the top cover 213 and the bottom cover 214 are respectively located on two sides of the energy storage unit 220. When the energy storage module 201 is placed in the direction shown in FIG. 1, in the up-down direction shown in FIG. 1, the top cover 213 is arranged on the upper side of the energy storage unit 220, and the bottom cover 214 is arranged on the lower side of the energy storage unit 220, and the top cover 213 and the bottom cover 214 are both connected to the first side plate 211 and the second side plate 212. Further, the top cover 213 and the bottom cover 214 are both connected between the first side plate 211 and the second side plate 212, or the first side plate 211 and the second side plate 212 are both connected between the top cover 213 and the bottom cover 214, for example: the top cover 213 and the bottom cover 214 are both connected between the first side plate 211 and the second side plate 212. A second air duct 216 is formed between the surface of the energy storage unit 220 near the top cover 213 and the top cover 213 and/or between the surface of the energy storage unit 220 near the bottom cover 214 and the bottom cover 214 through the separation effect of the support beam 219. That is to say, the second air duct 216 can be formed between the surface of the energy storage unit 220 near the top cover 213 and the top cover 213 through the separation effect of the support beam 219, or the second air duct 216 can be formed between the surface of the energy storage unit 220 near the bottom cover 214 and the bottom cover 214 through the separation effect of the support beam 219, the second air duct 216 can also be formed between the surface of the energy storage unit 220 near the top cover 213 and the top cover 213 and between the surface of the energy storage unit 220 near the bottom cover 214 and the bottom cover 214. For example, the second air duct 216 is formed between the surface of the energy storage unit 220 near the top cover 213 and the top cover 213, and between the surface of the energy storage unit 220 near the bottom cover 214 and the bottom cover 214.

Specifically, support beam 219 is provided between the surface of the energy storage unit 220 near the top cover 213 and the top cover 213, and between the surface of the energy storage unit 220 near the bottom cover 214 and the bottom cover 214. The support beam 219 between the energy storage unit 220 and the top cover 213 separate the energy storage unit 220 and the top cover 213 to form a second air duct 216 between the energy storage unit 220 and the top cover 213, and the support beam 219 between the energy storage unit 220 and the bottom cover 214 separate the energy storage unit 220 and the bottom cover 214 to form a second air duct 216 between the energy storage unit 220 and the bottom cover 214. The external air of the energy storage module 201 can flow into the second air duct 216, and the air can exchange heat with the energy storage unit 220 after flowing into the second air duct 216, and then the air will flow out of the energy storage module 201, thereby taking away the heat of the cells 208, achieving a cooling effect, and improving the heat dissipation efficiency of the cell 208. Furthermore, by providing a second air duct 216 between the energy storage unit 220 and the top cover 213 and between the energy storage unit 220 and the bottom cover 214, the temperature difference between the two sides of a single cell 208 can be controlled within 4 degrees, so that the temperature difference between different areas of the cells 208 can be more balanced.

In some embodiments of the present disclosure, as shown in FIG. 2, FIG. 4 and FIG. 5, the support beam 219 is in contact with the surface of the energy storage unit 220 near the top cover 213 and the top cover 213 and/or the support beam 219 is in contact with the surface of the energy storage unit 220 near the bottom cover 214 and the bottom cover 214 to divide the second air duct 216 into multiple sub-air ducts 217, and the support beam 219 has air passages 218 connecting two adjacent sub-air ducts 217. Further, when the energy storage module 201 is placed in the direction shown in FIG. 1, the support beam 219 located between the energy storage unit 220 and the top cover 213 is in contact with both the upper surface of the energy storage unit 220 and the top cover 213, the support beam 219 located between the energy storage unit 220 and the bottom cover 214 is in contact with both the lower surface of the energy storage unit 220 and the bottom cover 214. The support beam 219 located between the energy storage unit 220 and the top cover 213 can divide the second air duct 216 into multiple sub-air ducts 217, the support beam 219 located between the energy storage unit 220 and the bottom cover 214 can divide the second air duct 216 into multiple sub-air ducts 217. The multiple sub-air ducts 217 located between the energy storage unit 220 and the top cover 213 are arranged in sequence in the length direction of the cells 208, and the multiple sub-air ducts 217 located between the energy storage unit 220 and the bottom cover 214 are arranged in sequence in the length direction of the cells 208.

After the external gas of the energy storage module 201 flows into the sub-air ducts 217, the gas can flow into the adjacent sub-air duct 217 through the air passages 218. In the process of the gas flow, it can exchange heat with the cells 208, taking away the heat of the cells 208, and finally the gas will flow out of the energy storage module 201. Moreover, by contacting the support beam 219 with the energy storage unit 220, and the support beam 219 located below the energy storage unit 220 can support the energy storage unit 220. Meanwhile, the support beam 219 located below the energy storage unit 220 and the support beam 219 located above the energy storage unit 220 clamp the energy storage unit 220, so that the energy storage unit 220 is firmly assembled in the energy storage module 201.

Further, as shown in FIG. 2 and FIG. 4, a plurality of support beams 219 may be provided between the energy storage unit 220 and the top cover 213, and the plurality of support beams 219 between the energy storage unit 220 and the top cover 213 are sequentially spaced apart in the length direction of the cells 208 (i.e., the front-rear direction in FIG. 4). At the same time, a plurality of support beams 219 may also be provided between the energy storage unit 220 and the bottom cover 214, and the plurality of support beams 219 between the energy storage unit 220 and the bottom cover 214 are sequentially spaced apart in the length direction of the cells 208. By clamping the energy storage unit 220 simultaneously through the plurality of support beams 219, and by clamping the energy storage unit 220 through the first side plate 211 and the second side plate 212, the energy storage unit 220 can be more firmly assembled in the energy storage module 201, and the first side plate 211 and the second side plate 212 can also firmly clamp the energy storage unit 220.

In some embodiments of the present disclosure, as shown in FIG. 4, the support beam 219 spans all the cells 208 along the thickness direction of the cells 208. As shown in FIG. 4, the leftmost end of the support beam 219 is connected to the first side plate 211, and the rightmost end of the support beam 219 is connected to the second side plate 212. The support beam 219 spans all the cells 208 along the thickness direction of the cells 208 and then connects to the first side plate 211 and the second side plate 212, so that the first side plate 211 and the second side plate 212 can reliably clamp the energy storage unit 220.

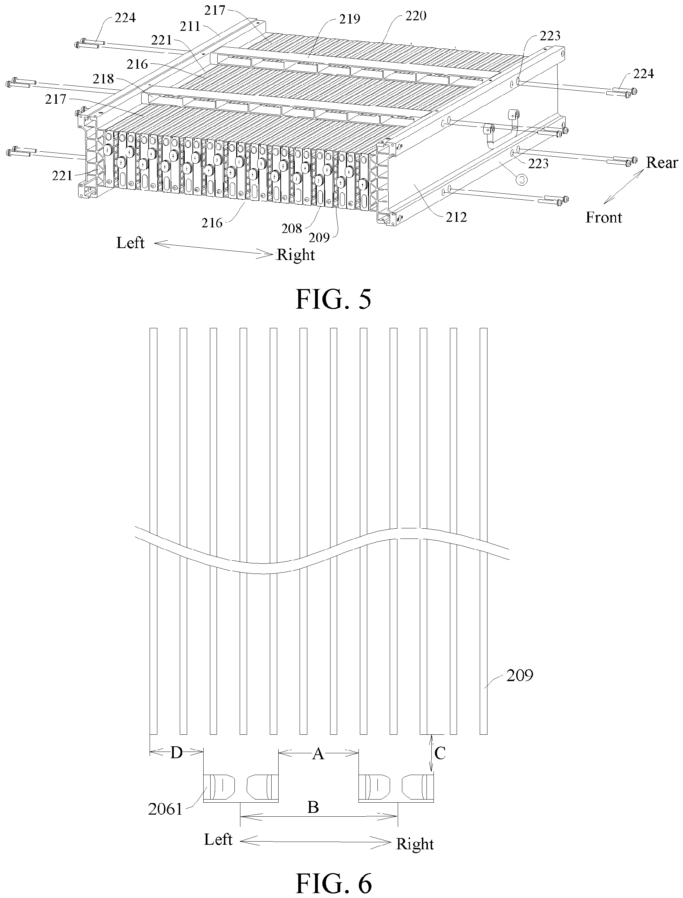

In some embodiments of the present disclosure, as shown in FIG. 5, the inner surface of the first side plate 211 near the energy storage unit 220 and/or the inner surface of the second side plate 212 near the energy storage unit 220 may be provided with a limiting boss 221 protruding towards the energy storage unit 220. It can also be understood that the limiting boss 221 can be provided on the inner surface of the first side plate 211 near the energy storage unit 220, and the limiting boss 221 can also be provided on the inner surface of the second side plate 212 near the energy storage unit 220. The limiting boss 221 can also be provided on the inner surface of the first side plate 211 near the energy storage unit 220 and the inner surface of the second side plate 212 near the energy storage unit 220. After the support beam 219, the first side plate 211 and the second side plate 212 are assembled, the limiting boss 221 can squeeze the energy storage unit 220, so that the energy storage unit 220 is fixed in the energy storage module 201.

Furthermore, the support beam 219 is over lapped over the limiting boss 221. Specifically, as shown in FIG. 5, the two ends of the support beam 219 located between the energy storage unit 220 and the top cover 213 are respectively lapped over the upper surface of the limiting boss 221 of the first side plate 211 and the upper surface of the limiting boss 221 of the second side plate 212. The limiting boss 221 supports the support beam 219 between the energy storage unit 220 and the top cover 213, so that the support beam 219 can be reliably assembled with the first side plate 211 and the second side plate 212. The two ends of the support beam 219 between the energy storage unit 220 and the bottom cover 214 are respectively overlapped with the lower surface of the limiting boss 221 of the first side plate 211 and the lower surface of the limiting boss 221 of the second side plate 212. The limiting boss 221 supports the support beam 219 between the energy storage unit 220 and the bottom cover 214, thereby preventing the support beam 219 between the energy storage unit 220 and the bottom cover 214 from excessively squeezing the cells 208.

In some embodiments of the present disclosure, as shown in FIG. 5, a third air duct 222 is formed in the limiting boss 221, and the third air duct 222 is extended in the length direction of the cells 208. Since the limiting boss 221 is in contact with the energy storage unit 220, after the gas flows into the third air duct 222, the gas can exchange heat with the energy storage unit 220. When the gas flows along the third air duct 222, the gas can continuously take away the heat of the energy storage unit 220, thereby achieving the effect of cooling the energy storage unit 220.

In some embodiments of the present disclosure, as shown in FIG. 5, the first side plate 211 and the second side plate 212 are both provided with mounting holes 223 for assembling the support beam 219, the axis of the mounting holes 223 extends in the thickness direction of the cells 208, the mounting holes 223 on the first side plate 211 penetrates the first side plate 211 in the thickness direction of the first side plate 211, and the mounting holes 223 on the second side plate 212 penetrates the second side plate 212 in the thickness direction of the second side plate 212, and fasteners 224 pass through the mounting hole 223 and cooperate with the support beam 219 to enable the first side plate 211 and the second side plate 212 to clamp the energy storage unit 220. There are multiple fasteners 224 and mounting holes 223, and the multiple mounting holes 223 and the multiple fasteners 224 are arranged one by one. The fasteners 224 can be bolts or screws. The fasteners 224 pass through the corresponding mounting holes 223 from the outside of the first side plate 211 and the second side plate 212 and are threadedly connected with the support beam 219, thereby fixing the first side plate 211 and the second side plate 212, and then the first side plate 211 and the second side plate 212 clamp the energy storage unit 220.

In some embodiments of the present disclosure, as shown in FIG. 7 and FIG. 8, the energy storage module 201 may also include: a heat sink 209, a heat sink 209 is provided between at least two adjacent cells 208 among the multiple cells 208, the heat sink 209 is in contact with the adjacent cells 208, and the heat sink 209 defines a first air duct 210 extending along the length direction of the cells 208. When the energy storage module 201 is placed in the direction shown in FIG. 7, the length direction of the cells 208 refers to the front-rear direction shown in FIG. 7. This arrangement enables the contact surface between the heat sink 209 and the cells 208 to be the large surface of the cells 208, which can improve the heat dissipation effect of the heat sink 209 on the cells 208. Furthermore, the gas (such as cold air) can flow into the first air duct 210 after entering the energy storage module 201. When the cold air flows along the first air duct 210, it exchanges heat with the cells 208, taking away the heat of the cells 208 to achieve the cooling effect of the cells 208. After the air in the first air duct 210 exits the first air duct 210, the air can flow out of the energy storage module 201, thereby discharging heat from the energy storage module 201.

In some embodiments of the present disclosure, as shown in FIG. 5, FIG. 7 and FIG. 8, the heat sink 209 may define a plurality of first air ducts 210, and the plurality of first air ducts 210 are sequentially arranged along the width direction of the cells 208. When the energy storage module 201 is placed in the direction shown in FIG. 7, the width direction of the cell 208 refers to the up-down direction shown in FIG. 7. This setting enables the gas to flow smoothly in different first air ducts 210, avoiding the formation of vortices in the heat sink 209, thereby ensuring the gas flow velocity and facilitating the gas to flow out of the heat sink 209, thereby quickly taking away the heat of the cells 208, and also avoiding noise generated by the gas in the heat sink 209.

In some embodiments of the present disclosure, as shown in FIG. 7 and FIG. 8, a plurality of cells 208 form a plurality of cells, and each cell may include at least one cell 208. Further, as shown in FIG. 7, every two cells 208 form a cell, and the two cells 208 located at the end each form a cell. A heat sink 209 is provided between two adjacent cells. which ensures that each cell 208 is in contact with at least one heat sink 209, so that each cell 208 has at least one heat sink 209 to dissipate heat for it, and the heat sink can also be attached to the side of the cell 208 with a larger area, thereby increasing the heat dissipating area of the cell 208 and reducing the temperature difference in various areas of the cells 208. At the same time, through the arrangement of multiple cells 208 and heat sinks 209, the heat sinks 209 can provide support for the cells 208, thereby improving the structural stability and safety of the energy storage module 201.

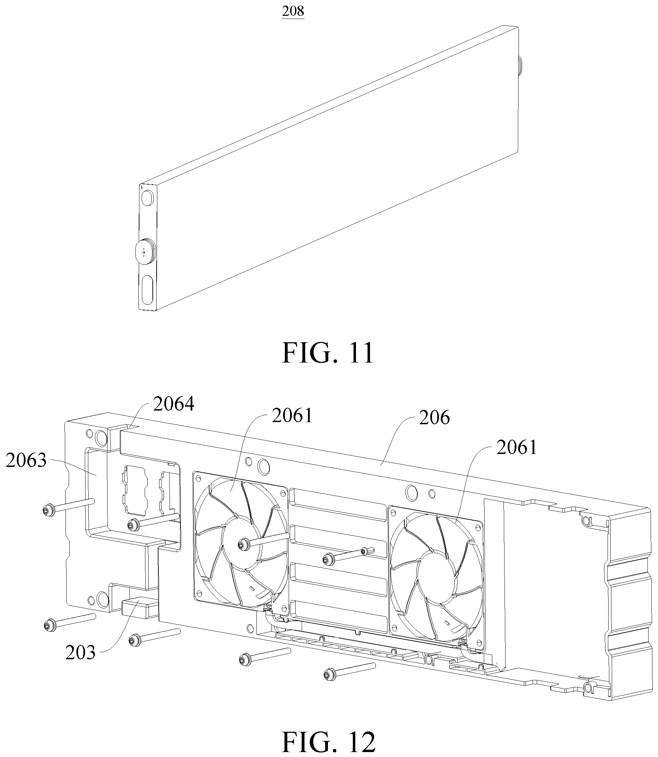

In some embodiments of the present disclosure, as shown in FIG. 4 and FIG. 12, the energy storage module 201 may further include: a driving fan 2061. The driving fan 2061 is located at one end of the energy storage unit 220 in the length direction of the cells 208, and the driving fan 2061 is spaced apart from the energy storage unit 220, and the driving fan 2061 is used to drive the gas to flow along the first air duct 210 in the first air duct 210. Furthermore, as shown in FIG. 4, when the energy storage module 201 is placed in the direction shown in FIG. 4, the driving fan 2061 is located at the front end of the energy storage unit 220, and the selection of the driving fan 2061 may be based on specific heat dissipation requirements to choose different models of fans. When the driving fan 2061 is working, the blades of the driving fan 2061 rotate, and under the drive of the driving fan 2061, the gas in the first air duct 210 flows along the first air duct 210 toward the driving fan 2061, and the heat generated by the cells 208 is taken away by the gas flow, and the gas brought out by the driving fan 2061 is finally discharged to the outside of the energy storage module 201. By providing the driving fan 2061, the gas flow velocity in the first air duct 210 can be increased, and the heat of the cells 208 can be taken away more quickly, thereby improving the heat exchange efficiency of the heat sink 209.

In some embodiments of the present disclosure, as shown in FIG. 4 and FIG. 6, multiple driving fans 2061 can be set, and multiple driving fans 2061 are sequentially spaced apart along the thickness direction of the cells 208. It should be noted that the number of driving fans 2061 is positively correlated with the number of cells 208 in the energy storage module 201, that is, the more cells 208 are set in the energy storage module 201, the more driving fans 2061 are set, and the fewer cells 208 are set in the energy storage module 201, the fewer driving fans 2061 are set. The present disclosure takes the example of setting two driving fans 2061 in the energy storage module 201 for explanation. By setting multiple driving fans 2061, the coverage area of the driving fans 2061 can be increased, thus ensuring the improvement of the gas flow rate of the first air duct 210 of each heat sink 209 in the energy storage module 201, thereby further improving the heat dissipation efficiency of the energy storage module 201.

In some embodiments of the present disclosure, as shown in FIG. 6, along the thickness direction of the cells 208, the spacing distance between any two adjacent driving fans 2061 is A, satisfying the relationship: 90mm≤A≤100mm. For example, the spacing distance between two adjacent driving fans 2061 is 98mm. By making the spacing distance between two adjacent driving fans 2061 A, in the thickness direction of the cells 208, i.e., the left-right direction in FIG. 6, it can be ensured that the driving fan 2061 can drive the gas flow in the first air duct 210 located between the two driving fans 2061, and the heat of the cells 208 can be taken away more quickly, thereby ensuring the heat exchange efficiency of the heat sink 209.

In some embodiments of the present disclosure, as shown in FIG. 6, along the thickness direction of the cells 208, the spacing distance between the center of one of any two adjacent driving fans 2061 and the center of the other driving fan 2061 is B, satisfying the relationship: 180mm≤B≤200mm. For example, the spacing distance between the center of one of two adjacent driving fans 2061 and the center of the other driving fan 2061 is 190mm. This setting can further ensure that the driving fan 2061 can drive the gas flow in the first air duct 210 located between the two driving fans 2061, thereby taking away the heat of the cells 208 more quickly, further ensuring the heat exchange efficiency of the heat sink 209.

In some embodiments of the present disclosure, as shown in FIG. 6, in the length direction of the cells 208, the spacing distance between the driving fan 2061 and the cells 208 is C, satisfying the relationship: 40mm≤C≤50mm. For example, the spacing distance between the driving fan 2061 and the cells 208 is 45.6mm. Furthermore, in the length direction of the cells 208, the spacing distance between the driving fan 2061 and the heat sink 209 is also C. This setting can further ensure that the driving fan 2061 can drive the gas flow in the first air duct 210 located between the two driving fans 2061, and can take away the heat of the cells 208 more quickly, thereby further ensuring the heat exchange efficiency of the heat sink 209, so that the spacing dimensions between the driving fan 2061 and the cells 208, and the spacing dimensions between the driving fan 2061 and the heat sink 209, are appropriate.

In some embodiments of the present disclosure, as shown in FIG. 6, in the thickness direction of the cells 208, the spacing distance between the surface of the outermost heat sink 209 away from the driving fan 2061 and the adjacent driving fan 2061 is D, satisfying the relationship: 60mm≤D≤70mm. For example, the spacing distance between the surface of the outermost heat sink 209 away from the driving fan 2061 and the adjacent driving fan 2061 is 65.2mm. This setting can ensure that the gas inside each first air duct 210 is driven to flow by the driving fan 2061, which can improve the temperature consistency of various areas of the energy storage module 201, thereby ensuring uniform heat dissipation of the energy storage module 201.

It should be noted that the larger the size of the driving fan 2061, the greater the air flow velocity in the first air duct 210. In the width direction of the cells 208, the size of the driving fan 2061 is greater than or equal to the width dimension of the cells 208. At this time, the size of the driving fan 2061 in the width direction of the cells 208 reaches 100% of the coverage rate of the cells 208, and the working area of the driving fan 2061 is circular, so that the maximum air flow can be achieved in the first air duct 210 to ensure the heat dissipation effect of the energy storage module 201. Furthermore, in the width direction of the energy storage module 201, the setting size of the driving fan 2061 accounts for 40%-50% of the width dimension of the energy storage module 201, for example, the setting size of the driving fan 2061 accounts for 44.62% of the width dimension of the energy storage module 201.

In some embodiments of the present disclosure, in the thickness direction of the cells 208, the side surface (i.e., the large surface) area of the cell 208 is S1, and the contact area between the heat sink 209 and the adjacent cell 208 is S2, satisfying the relationship: 0.90≤ S2/S1≤1, for example: S2/S1 is 0.97. This setting can ensure the contact area between the heat sink 209 and the adjacent cell 208, and can improve the heat exchange efficiency between the heat sink 209 and the cell 208.

In some embodiments of the present disclosure, as shown in FIG. 4 and FIG. 12, the energy storage module 201 may also include: a heat dissipating end plate 206, the driving fan 2061 is installed on the heat dissipating end plate 206, and the heat dissipating end plate 206 is fixedly connected to the first side plate 211 and/or the second side plate 212. It can also be understood that the heat dissipating end plate 206 can be connected to the first side plate 211, or the heat dissipating end plate 206 can be connected to the second side plate 212, or the heat dissipating end plate 206 can be fixedly connected to both the first side plate 211 and the second side plate 212. As shown in FIG. 4, the heat dissipating end plate 206 is installed at the front end of the first side plate 211 and the second side plate 212, and the heat dissipating end plate 206 is connected to both the first side plate 211 and the second side plate 212, and the heat dissipating end plate 206 can be installed on the first side plate 211 and the second side plate 212 by bolts. Furthermore, the heat dissipating end plate 206 is spaced apart from the energy storage unit 220. By installing the driving fan 2061 on the heat dissipating end plate 206, the gas in the first air duct 210 can move along the first air duct 210 toward the front of the energy storage module 201, and the driving fan 2061 can also be reliably arranged in the energy storage module 201.

Further, as shown in FIG. 1, FIG. 19-FIG. 21, the energy storage module 201 may also include: a connecting piece 2083 and a busbar mounting rack 2084. In the length direction of the cells 208, the two ends of the cells 208 are respectively provided with a positive pole and a negative pole. The connecting piece 2083 is connected between the positive pole and the negative pole of two adjacent cells 208 to realize the electrical connection of the two adjacent cells 208. The busbar mounting rack 2084 is arranged between the heat dissipating end plate 206 and the energy storage unit 220. The connecting piece 2083 is installed on the busbar mounting rack 2084. The busbar mounting rack 2084 can be fixedly mounted on the first side plate 211 and the second side plate 212. For example, the busbar mounting rack 2084 can be mounted on the first side plate 211 and the second side plate 212 by bolts, the busbar mounting rack 2084 can also be clamped on the first side plate 211 and the second side plate 212. The specific assembly form is not specifically limited. The heat dissipating end plate 206 is detachably mounted on the busbar mounting rack 2084, so that the heat dissipating end plate 206 is indirectly mounted on the first side plate 211 and the second side plate 212.

In some embodiments of the present disclosure, as shown in FIG. 1 and FIG. 4, the energy storage module 201 may further include: a fixing plate 2065, the fixing plate 2065 is installed on the first side plate 211 and/or the second side plate 212, that is to say, the fixing plate 2065 can be installed on the first side plate 211, the fixing plate 2065 can also be installed on the second side plate 212, and the fixing plate 2065 can also be installed on the first side plate 211 and the second side plate 212 at the same time. Furthermore, the part of the fixing plate 2065 connected to the side plate is configured as a flat plate structure. As shown in FIG. 2 and FIG. 4, the fixing plate 2065 can be provided with a handle 2066. Furthermore, the end of the fixing plate 2065 away from the side plate is provided with a handle 2066, and the part of the fixing plate 2065 connected to the handle 2066 is configured as a flat plate structure. When the energy storage module 201 needs to be taken and placed, the staff can lift the energy storage module 201 by grabbing the handle 2066, thereby facilitating the transportation of the energy storage module 201. In some embodiments of the present disclosure, the heat dissipating end plate 206 can be fixedly connected to the fixing plate 2065, and the heat dissipating end plate 206 can be mounted on the fixing plate 2065 using bolts.

Furthermore, as shown in FIG. 1, the energy storage module 201 may also include: a fixing bracket 2067, the fixing bracket 2067 is installed on the first side plate 211 and/or the second side plate 212, for example, the first side plate 211 and the second side plate 212 are both provided with the fixing bracket 2067, the fixing bracket 2067 is located between the fixing plate 2065 and the heat dissipating end plate 206, the fixing bracket 2067 is located on the inner side of the fixing plate 2065, and the fixing bracket 2067 is used to limit the position of the heat dissipating end plate 206. As shown in FIG. 1 and FIG. 4, the fixing brackets 2067 are provided at the front end of the first side plate 211 and the front end of the second side plate 212. In the front-rear direction of the energy storage module 201, the fixing bracket 2067 is provided between the heat dissipating end plate 206 and the side plate (i.e., the first side plate 211 and the second side plate 212). By providing the fixing bracket 2067 between the heat dissipating end plate 206 and the side plate, the heat dissipating end plate 206 can be spaced apart from the energy storage unit 220, and an installation space can be provided for the arrangement of components such as the connecting piece 2083, that is, an installation space can be provided for the arrangement of the busbar mounting rack 2084. Moreover, through the limiting cooperation between the fixing bracket 2067 and the heat dissipating end plate 206, the fixing bracket 2067 can limit the movement of the heat dissipating end plate 206 in the width direction of the energy storage module 201, and the heat dissipating end plate 206 and the busbar mounting rack 2084 can be reliably assembled. Furthermore, the fixing bracket 2067 is detachably connected to the fixing plate 2065, for example, the fixing bracket 2067 and the fixing plate 2065 are reliably fixed by bolts or screws. Furthermore, the heat dissipating end plate 206 can also be installed on the fixing bracket 2067 by bolts or screws.

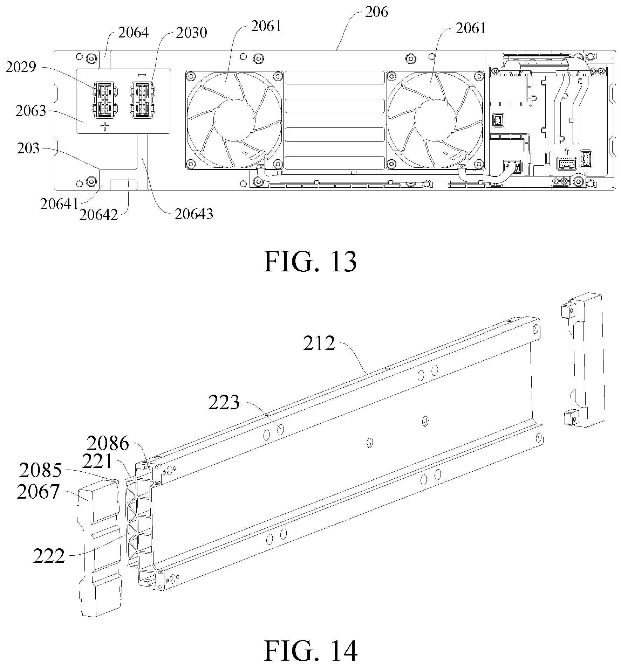

Furthermore, as shown in FIG. 14, the fixing bracket 2067 is provided with a plugging post 2085, and the first side plate 211 and the second side plate 212 are both provided with a plugging hole 2086. When the fixing bracket 2067 is assembled with the first side plate 211, the plugging post 2085 is inserted into the plugging hole 2086 of the first side plate 211, and then the fixing bracket 2067 and the first side plate 211 are fixed with bolts. When the fixing bracket 2067 is assembled with the second side plate 212, the plugging post 2085 is inserted into the plugging hole 2086 of the second side plate 212, and then the fixing bracket 2067 and the second side plate 212 are fixed with bolts. This setting can firmly install the fixing bracket 2067 on the first side plate 211 and the second side plate 212, which is convenient for disassembly and assembly of the fixing bracket 2067.

In some embodiments of the present disclosure, as shown in FIG. 4 and FIG. 13, the heat dissipating end plate 206 is provided with a positive connection terminal 2029 and a negative connection terminal 2030, the positive connection terminal 2029 is connected to the total positive output pole of the energy storage unit 220, and the negative connection terminal 2030 is connected to the total negative output pole of the energy storage unit 220. Furthermore, in the thickness direction of the cells 208, the positive connection terminal 2029 and the negative connection terminal 2030 are arranged near the same side of the heat dissipating end plate 206, for example, as shown in FIG. 4, the positive connection terminal 2029 and the negative connection terminal 2030 are arranged near the left side of the heat dissipating end plate 206. When the energy storage modules 201 are stacked in the energy storage cabinet, the positive connection terminal 2029 and the negative connection terminal 2030 are arranged on the same side of the heat dissipating end plate 206, so that the positive connection terminal 2029 of one energy storage module 201 and the negative connection terminal 2030 of the other energy storage module 201 in two adjacent energy storage modules 201 can be connected, and the length of the conductive bar 10 can be reduced. The conductive bar 10 is connected between the positive connection terminal 2029 and the negative connection terminal 2030. Furthermore, the conductive bar 10 is plug-connected to both the positive connection terminal 2029 and the negative connection terminal 2030.

In some embodiments of the present disclosure, as shown in FIG. 4 and FIG. 13, the heat dissipating end plate 206 can define a mounting groove 2063, and the positive connection terminal 2029 and the negative connection terminal 2030 are both arranged in the mounting groove 2063. Furthermore, the mounting groove 2063 is recessed from the outer surface of the heat dissipating end plate 206 toward the inside of the heat dissipating end plate 206. By arranging the positive connection terminal 2029 and the negative connection terminal 2030 in the mounting groove 2063, the positive connection terminal 2029 and the negative connection terminal 2030 can be hidden in the mounting groove 2063, thereby preventing the positive connection terminal 2029 and the negative connection terminal 2030 from protruding from the outer surface of the heat dissipating end plate 206 and interfering with other components.

In some embodiments of the present disclosure, as shown in FIG. 4 and FIG. 13, the heat dissipating end plate 206 further defines a fool-proof slot 203, the fool-proof slot is communicated with the mounting groove 2063, and the fool-proof slot 203 is used for wiring (for example, the conductive bar 10). Furthermore, the fool-proof slot 203 includes a first slot segment 20641, a second slot segment 20642, and a third slot segment 20643. The first slot segment 20641 and the second slot segment 20642 both extend in the height direction of the energy storage module 201, the second slot segment 20642 extends in the width direction of the energy storage module 201, and one end of the second slot segment 20642 is connected to the first slot segment 20641, and the other end of the second slot segment 20642 is connected to the third slot segment 20643, and the third slot segment 20643 is connected to the mounting groove 2063, and the shape of the conductive bar 10 is adapted to the shape of the fool-proof slot 203. As shown in FIG. 13, the positive connection terminal 2029 may be located on the left side of the negative connection terminal 2030. When a plurality of energy storage modules 201 are stacked in sequence, the conductive bar 10 is connected between two adjacent energy storage modules 201. The lower end of the conductive bar 10 is plug-connected to the positive connection terminal 2029 of the energy storage module 201 located below, and the upper end of the conductive bar 10 is plug-connected to the negative connection terminal 2030 of the energy storage module 201 located above, thereby realizing electrical connection between two adjacent energy storage modules 201. Moreover, by locating the conductive bar 10 in the fool-proof slot 203, the fool-proof slot 203 can guide the conductive bar 10, and avoid the conductive bar 10 from being installed incorrectly (for example, the upper end of the conductive bar 10 and the negative connection terminal 2030 of the energy storage module 201 located above, and the lower end of the conductive bar 10 and the negative connection terminal 2030 of the energy storage module 201 located below). At the same time, hiding the conductive bar 10 in the fool-proof slot 203 can avoid the conductive bar 10 from interfering with other components, thereby ensuring the reliability of the assembly of the conductive bar 10 with the positive connection terminal 2029 and the negative connection terminal 2030.

Furthermore, the heat dissipating end plate 206 can also define a wiring slot 2064, the wiring slot 2064 is connected to the mounting groove 2063, and the fool-proof slot 203 and the wiring slot 2064 are respectively located on two sides of the mounting groove 2063. Furthermore, when the energy storage module 201 is placed in the direction shown in FIG. 4, the wiring slot 2064 is arranged on the upper side of the mounting groove 2063, and the fool-proof slot 203 is arranged on the lower side of the mounting groove 2063. The wiring slot 2064 is arranged corresponding to the positive connection terminal 2029, and the fool-proof slot 203 is arranged corresponding to the negative connection terminal 2030. When multiple energy storage modules 201 are stacked in sequence, the conductive bar 10 is connected between two adjacent energy storage modules 201, the lower end of the conductive bar 10 is plugged and connected with the positive connection terminal 2029 of the energy storage module 201 located below and is located in the wiring slot 2064 of the energy storage module 201, and the upper end of the conductive bar 10 is plugged and connected with the negative connection terminal 2030 of the energy storage module 201 located above and is located in the fool-proof slot 203 of the energy storage module 201, thereby connecting two energy storage modules 201 in series. The wiring slot 2064 is used to avoid the conductive bar 10. The conductive bar 10 is hidden in the wiring slot 2064 to avoid interference between the conductive bar 10 and other components. The fool-proof slot 203 and the wiring slot 2064 can both limit the position of the conductive bar 10.

In some embodiments of the present disclosure, the energy storage module 201 may also include: a temperature detection member, the temperature detection member is used to collect the temperature of the energy storage unit 220. It should be noted that the temperature detection member can be set as a temperature sensor. The driving fan 2061 and the temperature detection member are both suitable for connecting to the battery management system of the energy storage module 201. The battery management system is used to control the speed of the driving fan 2061 by receiving the temperature information collected by the temperature detection member.

The driving fan 2061 and the temperature detection member can be connected to the battery management system of the energy storage module 201 through communication harness. The temperature detection member can detect the temperature of the energy storage unit 220 in real time. After the temperature detection member transmits the detected temperature information to the battery management system, the battery management system controls the rotation speed of the driving fan 2061 according to the received temperature information. For example, when the temperature of the energy storage unit 220 is high (for example, exceeding 35°C), the battery management system controls the driving fan 2061 to increase the rotation speed, preferably full speed rotation, which can effectively cool the energy storage module 201. When the temperature of the energy storage unit 220 is low (for example, the temperature reaches 30°C), the battery management system controls the driving fan 2061 to reduce the rotation speed, so that the driving fan 2061 rotates at half speed, which can also effectively cool the energy storage module 201. This setting can realize the variable speed adjustment of the driving fan 2061 of the energy storage module 201 at different temperatures, and can adjust the driving fan 2061 to an appropriate speed to meet the heat dissipation requirements of the energy storage module 201, which is conducive to saving electricity costs, and has an important effect on improving heat dissipation efficiency and power utilization. In addition, it maintains the stability of the temperature of the energy storage module 201 during operation and provides effective support for the stable output of the energy storage module 201.

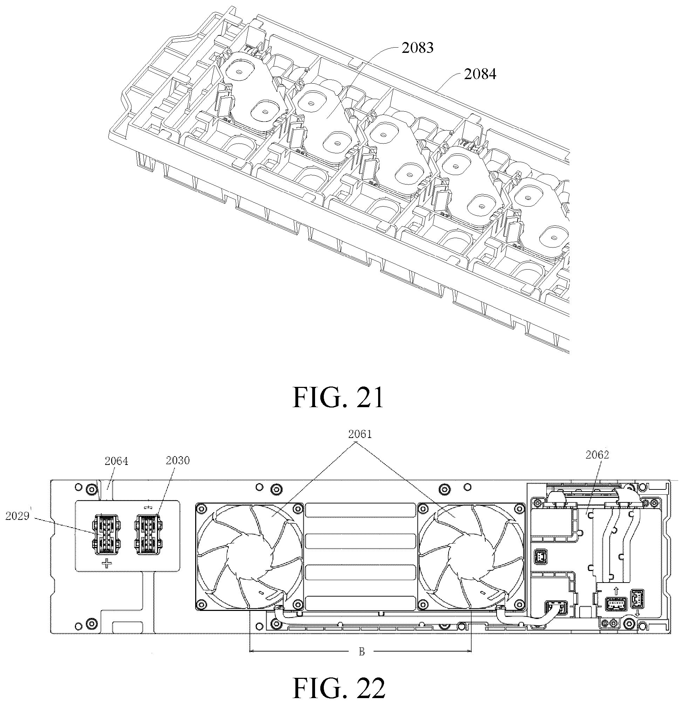

Further, as shown in FIG. 22, the energy storage module 201 can also be equipped with an information collector 2062 (BIC), and the information collector 2062 can be connected between the temperature detection member and the battery management system. The temperature information detected by the temperature detection member is transmitted to the battery management system through the information collector 2062. In addition, the driving fan 2061 is electrically connected to the information collector 2062 through wiring harness. By using the information collector 2062 to obtain power from the outside, the driving fan 2061 is driven to rotate.

In some embodiments of the present disclosure, as shown in FIG. 1, FIG. 2 and FIG. 32, the energy storage module 201 may further include: a ventilation panel 207, the ventilation panel 207 is arranged on the side of the driving fan 2061 away from the energy storage unit 220, and the ventilation panel 207 is provided with air outlet holes 20722. As shown in FIG. 1, the ventilation panel 207 and the heat dissipating end plate 206 are both arranged on the front side of the energy storage unit 220, the heat dissipating end plate 206 is located between the ventilation panel 207 and the energy storage unit 220, and the ventilation panel 207 is installed on the heat dissipating end plate 206. Furthermore, the ventilation panel 207 can be installed on the heat dissipating end plate 206 by magnetic attraction, and the ventilation panel 207 can also be installed on the heat dissipating end plate 206 by bolts. The specific assembly method of the ventilation panel 207 and the heat dissipating end plate 206 is selected according to actual conditions. When the driving fan 2061 is working, the blades of the driving fan 2061 rotate. Under the drive of the driving fan 2061, the gas in the first air duct 210 flows along the first air duct 210 toward the driving fan 2061, and the heat generated by the cells 208 is taken away by the gas flow. The gas brought out by the driving fan 2061 is finally discharged to the outside of the energy storage module 201 through the air outlet holes 20722 on the ventilation panel 207, realizing the function of dissipating hot air. In addition, the ventilation panel 207 can also shield the driving fan 2061 to prevent the driving fan 2061 from being exposed outside the energy storage module 201.

In some embodiments of the present disclosure, as shown in FIG. 1 and FIG. 2, the energy storage module 201 may further include: an end plate 2081, the end plate 2081 is disposed at the other end of the energy storage unit 220 and is spaced apart from the energy storage unit 220, the end plate 2081 is connected to the top cover 213 and/or the bottom cover 214, and the end plate 2081 is provided with first air inlet holes 2082 that is in communication with the first air duct 210. The end plate 2081 may be directly or indirectly connected to both the top cover 213 and the bottom cover 214, and the end plate 2081 may be directly assembled with the top cover 213 and the bottom cover 214 by bolts. As shown in FIG. 1, a busbar mounting rack 2084 may be provided between the end plate 2081 and the energy storage unit 220. The busbar mounting rack 2084 is directly or indirectly mounted on the first side plate 211 and the second side plate 212. The busbar mounting rack 2084 is also provided with a connecting piece 2083. The end plate 2081 may be mounted on the top cover 213 and/or the bottom cover 214, thereby realizing an indirect connection between the end plate 2081 and the first side plate 211 as well as the second side plate 212. In addition, through the end plate 2081 is provided with the first air inlet holes 2082 communicated with the first air duct 210, the gas can flow into the energy storage module 201 from the first air inlet holes 2082. A portion of the gas flowing into the energy storage module 201 flows into the heat sink 209, and another portion of the gas may flow into the second air duct 216, so that the cells 208 are surrounded by gas, thereby improving the heat dissipation efficiency of the cells 208.

In some embodiments of the present disclosure, as shown in FIG. 1, the top cover 213 and/or the bottom cover 214 may be provided with second air inlet holes 215 connected to the second air duct 216. For example, the top cover 213 and the bottom cover 214 are both provided with second air inlet holes 215 connected to the second air duct 216. Cold air can flow into the second air duct 216 through the second air inlet holes 215, so that the cells 208 are surrounded by cold air, thereby further improving the heat dissipation efficiency of the cells 208.

In some embodiments of the present disclosure, as shown in FIG. 11, the cell 208 is flat and resembles a blade, and the cell 208 may be a new type of lithium iron phosphate battery. The length dimension of the cell 208 is E, E satisfies the relationship: 400mm≤E≤ 1500mm, the width dimension of the cell 208 is F, F satisfies the relationship: 70mm≤F≤ 150mm, and the thickness dimension of the cell 208 is G, G satisfies the relationship: 10mm≤G ≤25mm. This setting can arrange the flat cell 208 in the energy storage module 201, and by arranging multiple cells 208 in sequence along the thickness direction of the cell 208, the energy density in the energy storage module 201 can be improved.

According to the energy storage cabinet of the embodiment of the present disclosure, including the energy storage module 201 of the above embodiments, the energy storage module 201 has a simple structure, which improves the assembly efficiency of the energy storage module 201, thereby improving the assembly efficiency of the energy storage cabinet. In addition, there is no need to set brackets for fixing the cells 208 inside the energy storage module 201, and more cells 208 can be arranged in the energy storage module 201, which improves the energy density of the energy storage module 201 and the energy storage cabinet. When the energy storage module 201 has the same energy density, the energy storage module 201 and the energy storage cabinet are smaller in size.

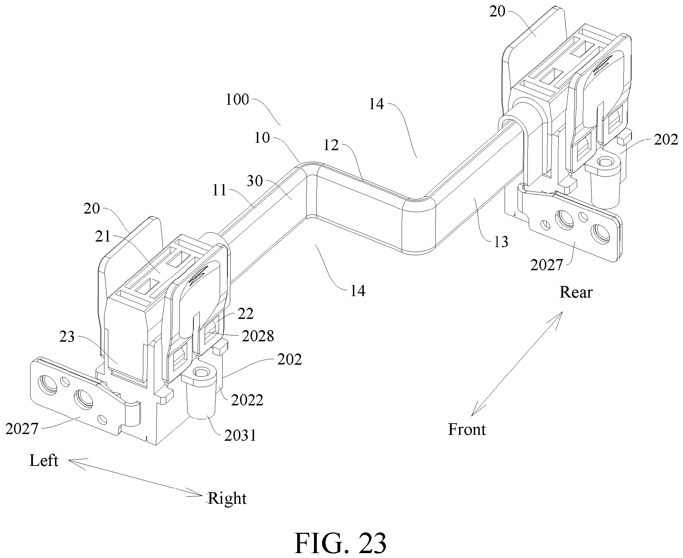

In some embodiments of the present disclosure, as shown in FIG. 23 to FIG. 31, two energy storage modules 201 are connected by an electrical connection assembly 100, and the electrical connection assembly 100 is suitable for being connected between the two energy storage modules 201 to realize the electrical connection between the two energy storage modules 201, so as to connect the two energy storage modules 201 in series or in parallel. The present disclosure takes the example of connecting the electrical connection assembly 100 between two energy storage modules 201 in series for illustration. The energy storage module 201 is provided with a connection terminal 202, and each energy storage module 201 can be provided with two connection terminals 202, one of the two connection terminals 202 is configured as a positive connection terminal 2029 of the energy storage module 201, and the other of the two connection terminals 202 is configured as a negative connection terminal 2030 of the energy storage module 201.

As shown in FIG. 23 to FIG. 31, the electrical connection assembly 100 includes: a conductive bar 10 and an insulating cover 20. The conductive bar 10 can be set as a copper bar. The conductive bar 10 is suitable for plugging and matching with the connection terminal 202 to electrically connect the conductive bar 10 and the connection terminal 202. The insulating cover 20 is covered on the conductive bar 10. The insulating cover 20 can prevent the conductive bar 10 from popping out of the connection terminal 202. The insulating cover 20 is connected to the connection terminal 202, and the insulating cover 20 is suitable for pressing against the conductive bar 10.

When two energy storage modules 201 need to be connected in series, the conductive bar 10 is plugged and connected to the positive connection terminal 2029 of one of the two energy storage modules 201, and the conductive bar 10 is also plugged and connected to the negative connection terminal 2030 of the other of the two energy storage modules 201, so as to connect the two energy storage modules 201 in series. During the plugging process of the conductive bar 10 and the connection terminal 202, there is no need to use tools such as a wrench to plug the conductive bar 10 into the connection terminal 202, which facilitates the docking of the conductive bar 10 and the connection terminal 202, and improving the assembly efficiency of the conductive bar 10 and the connection terminal 202, and can also reduce the installation cost of the conductive bar 10 and the connection terminal 202. At the same time, the insulating cover 20 is connected to the connection terminal 202, and the insulating cover 20 presses against the conductive bar 10. By pressing the insulating cover 20 against the conductive bar 10, the conductive bar 10 can be reliably plugged into the connection terminal 202, which can avoid virtual connection between the conductive bar 10 and the connection terminal 202, prevent arcing, improve the safety of the electrical connection assembly 100, and also improve the safety of the energy storage module 201. In addition, the insulating cover 20 is an insulating member, and the insulating cover 20 is covered on the conductive bar 10, which can avoid the conductive bar 10 from being exposed, avoid electric leakage, and improve high-voltage safety.

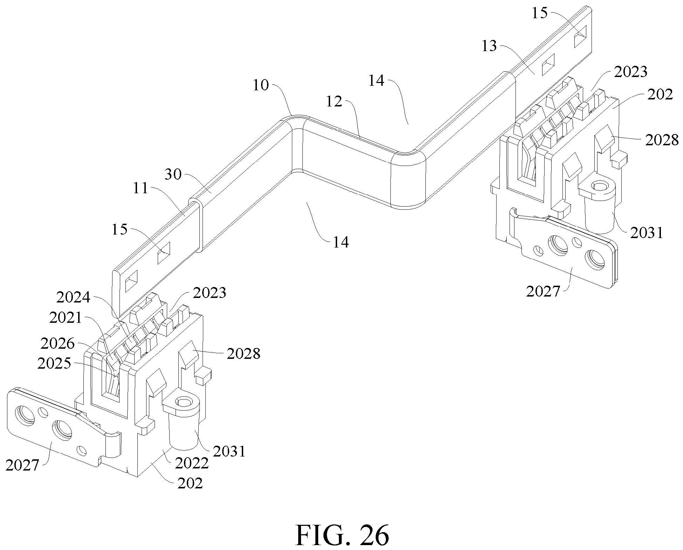

In some embodiments of the present disclosure, as shown in FIG. 26 to FIG. 29 and FIG. 31, the conductive bar 10 may include: a first sub-conductive bar 11, a second sub-conductive bar 12 and a third sub-conductive bar 13. The first sub-conductive bar 11 and the third sub-conductive bar 13 are respectively used to plug and cooperate with the corresponding connection terminal 202. The second sub-conductive bar 12 is connected between the first sub-conductive bar 11 and the third sub-conductive bar 13 to separate the first sub-conductive bar 11 and the third sub-conductive bar 13, so that an avoidance space 14 is formed between the first sub-conductive bar 11 and the second sub-conductive bar 12 and between the third sub-conductive bar 13 and the second sub-conductive bar 12, and each avoidance space 14 is used to configure a connection terminal 202.

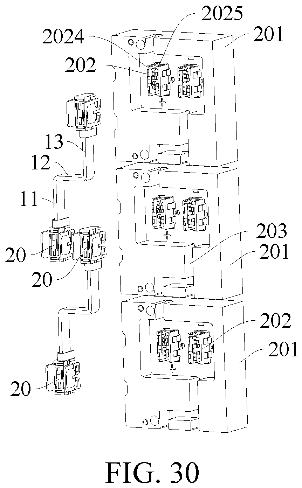

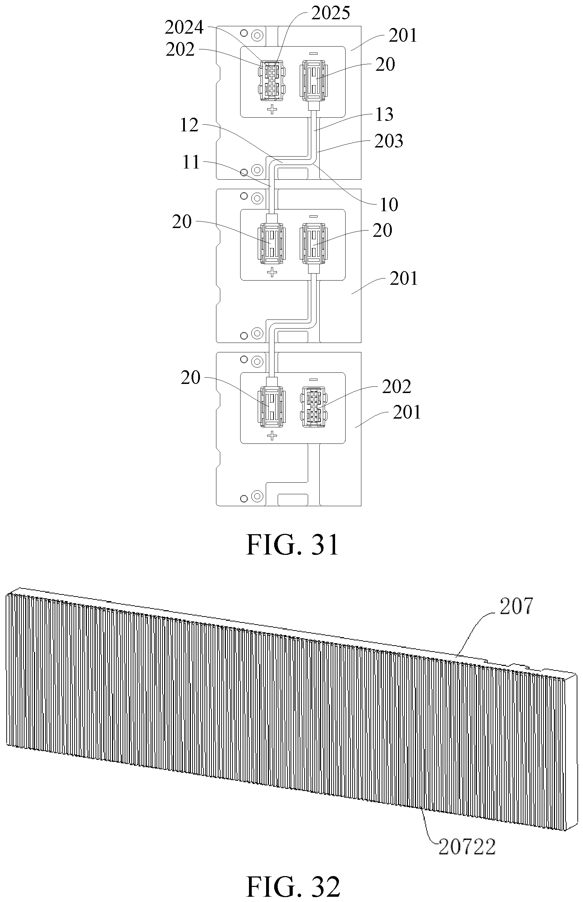

As shown in FIG. 30 and FIG. 31, the energy storage module 201 may be provided with a fool-proof slot 203. The shape of the fool-proof slot is consistent with the shape of the conductive bar 10. When two energy storage modules 201 need to be connected in series, the first sub-conductive bar 11 is plug-connected with the positive connection terminal 2029 of one of the two energy storage modules 201, and the negative connection terminal 2030 of the energy storage module 201 connected to the first sub-conductive bar 11 is located in the avoidance space 14 between the first sub-conductive bar 11 and the second sub-conductive bar 12, and the third sub-conductive bar 13 is plug-connected with the negative connection terminal 2030 of the other of the two energy storage modules 201, and the positive connection terminal 2029 of the energy storage module 201 connected to the third sub-conductive bar 13 is located in the avoidance space 14 between the third sub-conductive bar 13 and the second sub-conductive bar 12. The conductive bar 10 is located in the fool-proof slot 203, and the fool-proof slot 203 limits the conductive bar 10 along the length, width and thickness direction of the conductive bar 10. This setting can hide the conductive bar 10 in the fool-proof slot 203, avoid the conductive bar 10 from being scratched, and facilitate the positioning of the conductive bar 10. In addition, by setting the fool-proof slot 203 as a curved structure to cooperate and assemble with the conductive bar 10, it can prevent the conductive bar 10 from being installed incorrectly, and play a fool-proof role.

In some embodiments of the present disclosure, one end of the second sub-conductive bar 12 is connected to the first sub-conductive bar 11, and the other end of the second sub-conductive bar 12 is connected to the third sub-conductive bar 13, and the first sub-conductive bar 11 and the third sub-conductive bar 13 are extended in a direction away from each other. As shown in FIG. 26-FIG. 29 and FIG. 31, one end of the second sub-conductive bar 12 is connected to one end of the first sub-conductive bar 11, and the other end of the second sub-conductive bar 12 is connected to one end of the third sub-conductive bar 13. Furthermore, the second sub-conductive bar 12 is vertically arranged with the first sub-conductive bar 11 and the third sub-conductive bar 13. Such an arrangement can achieve the technical effect of forming an avoidance space 14 between the first sub-conductive bar 11 and the second sub-conductive bar 12 and between the third sub-conductive bar 13 and the second sub-conductive bar 12, so that the arrangement of the first sub-conductive bar 11, the second sub-conductive bar 12 and the third sub-conductive bar 13 is reasonable. Moreover, the conductive bar 10 can be configured as a "Z"-shaped structure. By configuring the conductive bar 10 as a "Z"-shaped structure, and the positive connection terminal 2029 and the negative connection terminal 2030 are led out from the same side of the energy storage module 201, it facilitates the installation and disassembly of the electrical connection assembly 100, as well as the maintenance of the electrical connection assembly 100.

In some embodiments of the present disclosure, as shown in FIG. 26- FIG. 28, the conductive bar 10 is provided with a positioning slot 15, and the positioning slot 15 is suitable for positioning and matching with the connection terminal 202. Further, the positioning slot 15 penetrates the conductive bar 10 in the thickness direction of the conductive bar 10. The first sub-conductive bar 11 and the third sub-conductive bar 13 are provided with positioning slots 15, and the connection terminal 202 can be provided with a limiting protrusion 2026. After the conductive bar 10 is plugged into the connection terminal 202, the limiting protrusion 2026 extends into the positioning slot 15 of the conductive bar 10. Through the cooperation of the limiting protrusion 2026 and the positioning slot 15, the conductive bar 10 can be reliably plugged into the connection terminal 202, which can avoid the connection terminal 202 and the conductive bar 10 from being separated, thereby further avoiding the virtual connection between the conductive bar 10 and the connection terminal 202, and also preventing the conductive bar 10 from shaking relative to the connection terminal 202.

Furthermore, the first sub-conductive bar 11 and the third sub-conductive bar 13 are both provided with a plurality of positioning slots 15, and the connection terminal 202 can be provided with a plurality of limiting protrusions 2026. Through the cooperation of the plurality of positioning slots 15 and the plurality of limiting protrusions 2026, the conductive bar 10 can be more reliably plugged into the connection terminal 202, and the connection terminal 202 and the conductive bar 10 can be further prevented from being separated, thereby further avoiding the virtual connection between the conductive bar 10 and the connection terminal 202, and further preventing the conductive bar 10 from shaking relative to the connection terminal 202.

In some embodiments of the present disclosure, as shown in FIG. 23, FIG. 28 and FIG.29, the insulating cover 20 may include: an insulating cover body 21 and a first clamping portion 22, the insulating cover body 21 is covered on the conductive bar 10 and is suitable for pressing against the conductive bar 10, in the first direction of the insulating cover 20, when the electrical connection assembly 100 is placed in the direction in FIG. 23, the first direction of the insulating cover 20 refers to the left-right direction in the figure, and the first clamping portion 22 is provided on at least one side of the insulating cover body 21, for example: in the first direction, the first clamping portion 22 is provided on both sides of the insulating cover body 21, and the first clamping portion 22 is suitable for clamping with the connection terminal 202. By providing the first clamping portion 22 on the insulating cover body 21, the insulation cover 20 can be stably installed on the connection terminal 202, so that the insulating cover body 21 can be reliably pressed against the conductive bar 10, thereby further preventing the virtual connection between the conductive bar 10 and the connection terminal 202, and the insulating cover body 21 is covered on the conductive bar 10, which can play an insulating protection role, avoid the electric leakage of the electrical connection assembly 100, and improve the safety of using the electrical connection assembly 100. At the same time, by clamping the insulation cover 20 and the connection terminal 202 together, it is convenient to disassemble and assemble the insulation cover 20 and the connection terminal 202, which can improve the assembly efficiency of the insulation cover 20 and the connection terminal 202.

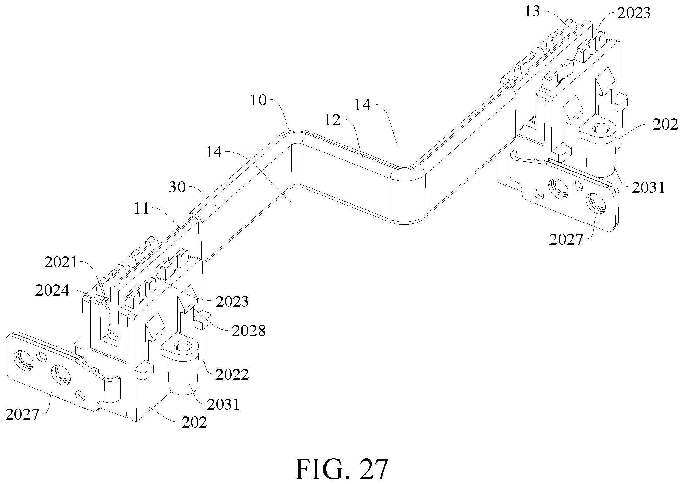

In some embodiments of the present disclosure, in the second direction of the insulating cover 20, when the electrical connection assembly 100 is placed in the direction shown in FIG. 23, the second direction of the insulating cover 20 refers to the front-rear direction shown in FIG. 23, and a shielding portion 23 is provided at the end of the insulating cover body 21 away from the conductive bar 10, and the shielding portion 23 is used to shield the conductive bar 10. As shown in FIG. 23, FIG. 27 and FIG. 29, the connection terminal 202 defines a plugging slot 2023. As shown in F FIG. 23 and FIG. 27, when the electrical connection assembly 100 is placed in the direction shown in FIG. 27, the upper end of the plugging slot 2023 is open, and in the second direction of the insulating cover 20, the front end of the plugging slot 2023 and the rear end of the plugging slot 2023 are both open. The conductive bar 10 can be pressed into the plugging slot 2023 of the connection terminal 202 from the open end of the plugging slot 2023 to achieve plug-in matching between the conductive bar 10 and the connection terminal 202. After the conductive bar 10 is inserted into the plugging slot 2023, the insulating cover 20 is installed on the connection terminal 202. The shielding portion 23 can shield the open end of the plugging slot 2023 in the second direction, thereby shielding the conductive bar 10, and further preventing the electric leakage of the electrical connection assembly 100. Furthermore, the insulating cover 20 is located at the upper end of the plugging slot 2023, and the insulating cover 20 can limit the position of the conductive bar 10, thereby preventing the conductive bar 10 from popping out of the plugging slot 2023.

In some embodiments of the present disclosure, as shown in FIG. 23, FIG. 26-FIG. 28, the outer cover of the conductive bar 10 is provided with an insulating sheath 30, and the insulating sheath 30 has an insulating function. Further, the insulating sheath 30 can be made of insulating glue. Further, in the length direction of the conductive bar 10, at least part of the structure of the first sub-conductive bar 11 and the third sub-conductive bar 13 is exposed outside the insulating sheath 30. By placing the insulating sheath 30 outside the conductive bar 10, the electric leakage of the conductive bar 10 can be avoided, and electric shock can be prevented after the user touches the conductive bar 10, thereby further improving the safety of the electrical connection assembly 100.

The energy storage module 201 is provided with a connection terminal 202, and a plurality of energy storage modules 201 are provided in the energy storage cabinet. The plurality of energy storage modules 201 are stacked in sequence in the height direction of the energy storage cabinet, and each energy storage module 201 is provided with two connection terminals 202, the two connection terminals 202 are arranged in the width direction of the energy storage module 201, and the two connection terminals 202 are arranged at the same end of the energy storage module 201, and one of the two connection terminals 202 is configured as a positive connection terminal 2029 of the energy storage module 201, and the other of the two connection terminals 202 is configured as a negative connection terminal 2030 of the energy storage module 201. The electrical connection assembly 100 is used to electrically connect two energy storage modules 201.

When two energy storage modules 201 need to be connected in series, the conductive bar 10 is plugged and connected to the positive connection terminal 2029 of one of the two energy storage modules 201, and the conductive bar 10 is also plugged and connected to the negative connection terminal 2030 of the other of the two energy storage modules 201, so as to connect the two energy storage modules 201 in series. During the plugging process of the conductive bar 10 and the connection terminal 202, there is no need to use tools such as a wrench to plug the conductive bar 10 into the connection terminal 202, which facilitates the docking of the conductive bar 10 and the connection terminal 202, and improving the assembly efficiency of the conductive bar 10 and the connection terminal 202, thereby improving the assembly efficiency of the energy storage cabinet, and can also reduce the installation cost of the conductive bar 10 and the connection terminal 202. At the same time, the insulating cover 20 is connected to the connection terminal 202, and the insulating cover 20 presses against the conductive bar 10. By pressing the insulating cover 20 against the conductive bar 10, the conductive bar 10 can be reliably plugged into the connection terminal 202, which can avoid virtual connection between the conductive bar 10 and the connection terminal 202, prevent arcing, improve the safety of the electrical connection assembly 100, and also improve the safety of the energy storage module 201, thereby improving the safety of the energy storage cabinet. In addition, the insulating cover 20 is an insulating member, and the insulating cover 20 is covered on the conductive bar 10, which can avoid the conductive bar 10 from being exposed, avoid electric leakage, and improve high-voltage safety.

In some embodiments of the present disclosure, as shown in FIG. 31, the energy storage module 201 is provided with two connection terminals 202, one of the two connection terminals 202 is connected to the conductive bar 10, and the other connection terminal 202 is away from the conductive bar 10. Each energy storage module 201 is provided with two connection terminals 202, one of the two connection terminals 202 of the energy storage module 201 is connected to the conductive bar 10, and the other connection terminal 202 is located in the avoidance space 14 formed by the conductive bar 10, so as to keep the connection terminal 202 away from the conductive bar 10 and avoid interference between the connection terminal 202 and the conductive bar 10. The two connection terminals 201 are arranged at the same end of the energy storage module 201, and the two connection terminals 201 are arranged close to the same side of the energy storage module 201. It can also be understood that the energy storage module 201 is provided with a positive connection terminal 2029 and a negative connection terminal 2030, and the positive connection terminal 2029 and the negative connection terminal 2030 are arranged close to the same side of the energy storage module 201.

As shown in FIG. 31, when the electrical connection assembly 100 and the connection terminal 202 are placed in the direction in FIG. 31, the positive connection terminal 2029 and the negative connection terminal 2030 are arranged close to the same side of the energy storage module 201, for example, the positive connection terminal 2029 and the negative connection terminal 2030 are arranged close to the left side of the energy storage module 201.

In some embodiments of the present disclosure, as shown in FIG. 26 and FIG. 27, the connection terminal 202 may include: a conductive elastic piece 2021 and an insulated terminal body 2022, the terminal body 2022 defines a plugging slot 2023, the conductive elastic piece 2021 is disposed in the plugging slot 2023, and the conductive bar 10 is inserted into the plugging slot 2023 and contacts the conductive elastic piece 2021. Furthermore, when the electrical connection assembly 100 is placed in the direction shown in FIG. 27, the upper end of the plugging slot 2023 is open, and in the second direction of the insulating cover 20, the front end and the rear end of the plugging slot 2023 are both open, and the conductive bar 10 is pressed from the open end of the plugging slot 2023 into the plugging slot 2023 of the connection terminal 202 to make the conductive elastic piece 2021 contact the conductive bar 10, thereby achieving electrical connection between the conductive bar 10 and the conductive elastic piece 2021.

Further, as shown in FIG. 26 and FIG. 27 , the conductive elastic piece 2021 may include a first conductive elastic piece 2024 and a second conductive elastic piece 2025, the first conductive elastic piece 2024 and the second conductive elastic piece 2025 are arranged opposite to each other in the first direction of the connection terminal 202, the first direction of the connection terminal 202 is consistent with the first direction of the insulation cover 20, and the conductive bar 10 is suitable for being inserted between the first conductive elastic piece 2024 and the second conductive elastic piece 2025. Furthermore, there are multiple first conductive elastic pieces 2024 and second conductive elastic pieces 2025, the multiple first conductive elastic pieces 2024 and the multiple second conductive elastic pieces 2025 are arranged in sequence along the second direction of the connection terminal 202, and the multiple first conductive elastic pieces 2024 and the multiple second conductive elastic pieces 2025 correspond to each other one by one, and the second direction of the connection terminal 202 is consistent with the second direction of the insulation cover 20. After the conductive bar 10 is pressed into the plugging slot 2023 of the connection terminal 202 from the open end of the plugging slot 2023, the conductive bar 10 is sandwiched between the first conductive elastic piece 2024 and the second conductive elastic piece 2025, ensuring that the conductive bar 10 is reliably in contact with both the first conductive elastic piece 2024 and the second conductive elastic piece 2025, thereby further avoiding virtual connection between the conductive bar 10 and the connection terminal 202.

Further, as shown in FIG. 26 and FIG. 27, the conductive bar 10 is provided with a positioning slot 15, and at least one of the first conductive elastic piece 2024 and the second conductive elastic piece 2025 has a limiting protrusion 2026, the limiting protrusion 2026 is suitable for extending into the positioning slot 15 of the conductive bar 10. The positioning slot 15 can penetrate the conductive bar 10 in the thickness direction of the conductive bar 10, the first sub-conductive bar 11 and the third sub-conductive bar 13 are provided with the positioning slot 15, the first conductive elastic piece 2024 and the second conductive elastic piece 2025 are both provided with a limiting protrusion 2026, after the conductive bar 10 is plugged into the connection terminal 202, the limiting protrusion 2026 extends into the positioning slot 15 of the conductive bar 10. Through the cooperation of the limiting protrusion 2026 and the positioning slot 15, the conductive bar 10 can be reliably plugged into the connection terminal 202, and the conductive elastic piece 2021 and the conductive bar 10 can be prevented from being separated, thereby further preventing virtual connection between the conductive bar 10 and the conductive elastic piece 2021, and also preventing the conductive bar 10 from shaking relative to the connection terminal 202. In addition, by extending the limiting protrusion 2026 into the positioning slot 15 of the conductive bar 10, it can be judged whether the conductive bar 10 is plugged in place.

In some embodiments of the present disclosure, as shown in FIG. 23 and FIG. 26, the connection terminal 202 may further include: a conductive member 2027, the conductive member 2027 may be set as a metal member, the conductive member 2027 is connected to the conductive elastic piece 2021, and the conductive member 2027 is suitable for being electrically connected to the energy storage module 201. Further, one end of the conductive member 2027 extends into the plugging slot 2023 and is connected to the conductive elastic piece 2021. When the connection terminal 202 is installed on the energy storage module 201, the conductive member 2027 is connected between the conductive elastic piece 2021 and the energy storage module 201, so as to realize the electrical connection between the connection terminal 202 and the energy storage module 201.

In some embodiments of the present disclosure, as shown in FIG. 23 and FIG. 26, the insulating cover 20 is provided with a first clamping portion 22, and the connection terminal 202 is provided with a second clamping portion 2028, and the second clamping portion 2028 is suitable for being clamped with the first clamping portion 22 of the insulating cover 20. In the first direction of the connection terminal 202, the second clamping portion 2028 is provided on both sides of the connection terminal 202, and the second clamping portion 2028 is connected to the first clamping portion 22 one by one. By clamping the second clamping portion 2028 with the first clamping portion 22, it is convenient to install the insulation cover 20 on the connection terminal 202, and it is also convenient to remove the insulation cover 20 from the connection terminal 202, so as to improve the efficiency of disassembly and assembly of the insulation cover 20 and the connection terminal 202. However, the present disclosure is not limited to this, and the insulation cover 20 and the connection terminal 202 can also be assembled by bolts. The specific assembly method of the insulation cover 20 and the connection terminal 202 can be selected according to actual conditions.

Further, as shown in FIG. 23 and FIG. 26, the first clamping portion 22 is one of the clamping hole and the clamping hook, and the second clamping portion 2028 is the other of the clamping hole and the clamping hook. For example, the first clamping portion 22 is the clamping hole, and the second clamping portion 2028 is the clamping hook. During the assembly process of the insulating cover 20 and the connection terminal 202, the insulating cover 20 is pressed to make the clamping hook snap into the clamping hole, and the assembly of the insulating cover 20 and the connection terminal 202 can be completed. Such a setting can simplify the structure of the first clamping portion 22 and the second clamping portion 2028, reduce the difficulty of producing the insulating cover 20 and the connection terminal 202, and improve the production efficiency of the insulating cover 20 and the connection terminal 202.

In some embodiments of the present disclosure, in the second direction of the connection terminal 202, the two ends of the plugging slot 2023 are open, and the insulating cover body 21 is provided with a shielding portion 23, the shielding portion 23 is used to shield the open end of the plugging slot 2023 away from the conductive bar 10. When the connection terminal 202 is placed in the direction shown in FIG. 27, the upper end of the plugging slot 2023 is open, and in the second direction of the connection terminal 202, both ends of the plugging slot 2023 are open, and the conductive bar 10 is pressed into the plugging slot 2023 of the connection terminal 202 from the open end of the plugging slot 2023 to make the conductive elastic piece 2021 contact the conductive bar 10. After the conductive bar 10 is inserted into the plugging slot 2023, the insulating cover 20 is installed on the connection terminal 202, and the shielding portion 23 can shield the open end of the plugging slot 2023, thereby shielding the conductive bar 10, and further preventing electric leakage of the electrical connection assembly 100.

Further, as shown in FIG. 23, the connection terminal 202 is provided with a mounting post 2031, and a bolt is passed through the mounting post 2031 to connect with the energy storage module 201 so as to fix the connection terminal 202 to the energy storage module 201.

It should be noted that, firstly, a plurality of energy storage modules 201 are installed in the energy storage cabinet, and the plurality of energy storage modules 201 are stacked and arranged in sequence in the height direction of the energy storage cabinet, and then the conductive bar 10 is installed in the fool-proof slot 203, and at the same time, the lower end of the conductive bar 10 is aligned with the connection terminal 202 of the energy storage module 201 located below, and the upper end of the conductive bar 10 is aligned with the connection terminal 202 of the energy storage module 201 located above, and press firmly on the conductive bar 10 to place the conductive bar 10 between the first conductive elastic piece 2024 and the second conductive elastic piece 2025 until the conductive bar 10 can no longer be pressed into the plugging slot 2023.

In description of this specification, description of reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations may be made to the embodiments without departing from the principles and purposes of the present disclosure. The scope of the disclosure is defined by the claims and their equivalents.

## Claims

1. An energy storage module (201), comprising:
an energy storage unit (220), the energy storage unit (220) comprising a plurality of cells (208), and the plurality of cells (208) being arranged in sequence in a thickness direction of the cells (208);
a first side plate (211) and a second side plate (212), the energy storage unit (220) being provided between the first side plate (211) and the second side plate (212); and
a support beam (219), the support beam (219) extending in the thickness direction of the cells (208) and the support beam (219) being connected between the first side plate (211) and the second side plate (212) so as to enable the first side plate (211) and the second side plate (212) to clamp the energy storage unit (220), and the support beam being arranged on at least one side of the energy storage unit (220) in a width direction of the cells (208).

2. The energy storage module (201) according to claim 1, further comprising: a top cover (213) and a bottom cover (214), wherein the top cover (213) and the bottom cover are located on two sides of the energy storage unit (220) respectively in the width direction of the cells (208), and the top cover (213) and the bottom cover (214) are both connected to the first side plate (211) and the second side plate (212), and a second air duct (216) is formed between a surface of the energy storage unit (220) near the top cover (213) and the top cover (213) and/or between the surface of the energy storage unit (220) near the bottom cover (214) and the bottom cover (214) by the separating action of the support beam (219).

3. The energy storage module (201) according to claim 2, wherein the support beam (219) is in contact with the surface of the energy storage unit (220) near the top cover (213) and the top cover (213), and/or the support beam (219) is in contact with the surface of the energy storage unit (220) near the bottom cover (214) and the bottom cover (214), in order to divide the second air duct (216) into a plurality of sub-air ducts (217), and the support beam (219) has air passages (218) connecting two adjacent sub-air ducts (217).

4. The energy storage module according to any one of claims 1-3, wherein the support beam (219) spans all of the cells (208) in the thickness direction of the cells (208).

5. The energy storage module (201) according to any one of claims 1-4, wherein an inner surface of the first side plate (211) near the energy storage unit (220) and/or an inner surface of the second side plate (212) near the energy storage unit (220) is provided with a limiting boss (221) protruding towards the energy storage unit (220), and the support beam (219) overlaps with the limiting boss (221).

6. The energy storage module according to claim 5, wherein a third air duct (222) is formed inside the limiting boss (221).

7. The energy storage module according to any one of claims 1-6, wherein the first side plate (211) and the second side plate (212) are both provided with mounting holes (223) for assembling the support beam (219), and the axis of the mounting holes (223) extends in the thickness direction of the cells (208), and fasteners pass through the mounting holes (223) and cooperate with the support beam (229) so as to enable the first side plate (211) and the second side plate (212) to clamp the energy storage unit (220).

8. The energy storage module (201) according to claim 2, further comprising: a heat sink (209), wherein the heat sink (209) is provided between at least two adjacent cells (208) among the plurality of cells (208), the heat sink (209) is in contact with the adjacent cells (208), and the heat sink (209) defines a first air duct (210) extending along a length direction of the cells (208).

9. The energy storage module (201) according to claim 8, further comprising: a driving fan (2061), wherein the driving fan (2061) is located at one end of the energy storage unit (220) and spaced apart from the energy storage unit (220) in the length direction of the cells (208), and the driving fan (2061) is used to drive gas to flow along the first air duct (210) in the first air duct (210).

10. The energy storage module (201) according to claim 9, wherein there are a plurality of driving fans (2061), and the plurality of driving fans (2061) are sequentially spaced apart along the thickness direction of the cells (208).

11. The energy storage module (201) according to claim 9,further comprising: a heat dissipating end plate (206), wherein the driving fan (2061) is installed on the heat dissipating end plate (206), and the heat dissipating end plate (206) is fixedly connected to the first side plate (211) and/or the second side plate (212).

12. The energy storage module according to claim 11, further comprising: a fixing plate, wherein the fixing plate is installed on the first side plate and/or the second side plate, and the fixing plate is provided with a handle.

13. The energy storage module (201) according to claim 12, further comprising: a fixing bracket (2067), wherein the fixing bracket (2067) is installed on the first side plate (211) and/or the second side plate (212), the fixing bracket (2067) is located between the fixing plate (2065) and the heat dissipating end plate (206) and is used to limit the position of the heat dissipating end plate (206).

14. The energy storage module (201) according to claim 11, wherein the heat dissipating end plate (206) is provided with a positive connection terminal (2029) and a negative connection terminal (2030), the positive connection terminal (2029) is connected to a total positive output pole of the energy storage unit (220), and the negative connection terminal (2030) is connected to a total negative output pole of the energy storage unit (220).

15. The energy storage module (201) according to claim 14, wherein the positive connection terminal (2029) and the negative connection terminal (2030) are arranged on the same side near the heat dissipating end plate (206) in the thickness direction of the cells (208).

16. The energy storage module (201) according to claim 14, wherein the heat dissipating end plate (206) defines a mounting groove (2063), and the positive connection terminal (2029) and the negative connection terminal (2030) are both located in the mounting groove (2063).

17. The energy storage module according to claim 16, wherein the heat dissipating end plate (206) further defines a fool-proof slot (203), the fool-proof slot (203) is communicated with the mounting groove (2063), and the fool-proof slot (203) is used for wiring.

18. The energy storage module (201) according to claim 17, wherein the heat dissipating end plate (206) further defines a wiring slot (2064), the wiring slot (2064) is communicated with the mounting groove (2063), and the fool-proof slot (203) and the wiring slot (2064) are located on two sides of the mounting groove (2063) respectively.

19. The energy storage module (201) according to claim 9, wherein further comprising: a temperature detection member, the temperature detection member is used to collect the temperature of the energy storage unit (220), the driving fan (2061) and the temperature detection member are both connected to a battery management system of the energy storage module (201), and the battery management system is used to regulate the speed of the driving fan (2061) by receiving the temperature information collected by the temperature detection member.

20. The energy storage module (201) according to claim 9, wherein further comprising: a ventilation panel (207), the ventilation panel (207) is provided on the side of the driving fan (2061) away from the energy storage unit (220), and the ventilation panel (207) is provided with air outlet holes (20722).

21. The energy storage module (201) according to claim 9, wherein further comprising: an end plate (2081), the end plate (2081) is provided at the other end of the energy storage unit (220) and spaced apart from the energy storage unit (220), the end plate (2081) is connected to the top cover (213) and/or the bottom cover (214), and the end plate (2081) is provided with first air inlet holes (2082) communicating with the first air duct (210).

22. The energy storage module (201) according to claim 2, wherein the top cover (213) and/or the bottom cover (214) are provided with second air inlet holes (215) communicating with the second air duct (216).

23. The energy storage module (201) according to any one of claims 1-22, wherein the length dimension of the cell (208) is E, E satisfies the relationship: 400mm≤E≤ 1500mm;
the width dimension of the cell (208) is F, F satisfies the relationship: 70mm≤F≤ 150mm;
the thickness dimension of the cell (208) is G, G satisfies the relationship: 10mm≤G≤ 25mm.

24. An energy storage cabinet, comprising the energy storage module (201) according to any one of claims 1-23.
